# EUROPEAN PATENT SPECIFICATION

(11) **EP 3 874 186 B1**
(45) Date of publication and mention of the grant of the patent: **01.10.2025**
(21) Application number: 18938958.8
(22) Date of filing: 13.11.2018
(51) Int. Cl.: F16K 3/08, F16K 3/314, F16K 27/04, F16K 7/12, F16K 27/02

(54) **CONTROL PLATE FOR A HIGH CONDUCTANCE VALVE**
STEUERPLATTE FÜR EIN HOCHLEITENDES VENTIL
PLAQUE DE RÉGULATION POUR UNE SOUPAPE À CONDUCTANCE ÉLEVÉE

(30) Priority: 01.11.2018 US 201816178247
(43) Date of publication of application: 08.09.2021
(73) Proprietor: Illinois Tool Works Inc., Glenview, IL 60025 (US)
(72) Inventor: VU, Kim Ngoc, Yorba Linda, CA 92887 (US)
(74) Representative: HGF
(86) International application number: PCT/US2018/060829
(87) International publication number: WO 2020/091817

(56) References cited:
- WO-A1-2015/191960
- US-A1- 2005 067 603
- US-A1- 2010 108 920
- US-A1- 2010 326 533
- US-A1- 2011 220 230
- US-A1- 2016 138 730
- US-A1- 2016 279 376
- US-A1- 2016 369 915
- US-A1- 2017 009 890
- US-A1- 2017 009 890

## Description

### CROSS-REFERENCE TO RELATED APPLICATIONS

This application is related to United States Patent Application Serial No. 15/204,245 titled "CONTROL PLATE IN A VALVE," filed 07-July-2016, and United States Patent Application Serial No. 15/182,978 titled "LOW HYSTERESIS DIAPHRAGM FOR A VALVE," filed l5-June-20l6, United States Patent Application Serial No. 14/932,086 titled "VALVE STROKE AMPLIFIER MECHANISM ASSEMBLY," filed 4-November-20l5, and United States Patent Application Serial No. 14/737,564 titled "HIGH CONDUCTANCE VALVE FOR FLUIDS AND VAPORS," filed l2-June-20l5.

### BACKGROUND

The present invention is related to a moveable portion of a fluid control valve that may be actively positioned, anywhere between an extreme open condition and an extreme closed condition, to adjust a flow of fluid passing through the valve. The movable portion includes provision for a portion of the flowing fluid to pass through a control plate thereby improving cleanliness by reducing potential fluid stagnation. The invention is particularly useful in valves intended for high purity proportional control or modulating control of fluid delivery within industrial processes making semiconductor devices, pharmaceuticals, or fine chemicals, and many similar fluid delivery systems that simultaneously demand a leak-tight shut-off in the fully closed condition along with proportional control. US20160369915A1 relates to a low hysteresis diaphragm for a valve.

### SUMMARY

In consideration of the foregoing, applicant has invented a high purity fluid control valve that includes a moveable control plate having at least one flow-through passage to enhance fluid sweep of the internal valve volume. The invention is set out in the appended claims. The valve is of jet and seat type wherein a relatively narrow planar land is formed at the opening of a fluid passageway and a flat seat may be moved into contact with the land to close off fluid flow. In this disclosure the jet element is usually described as an orifice ridge and the seat element is usually described as a control plate. The valve uses nested orifice ridges to achieve high conductance with small actuator movement by providing large control gap length with small enclosed area. The control plate has a continuous uninterrupted flat portion sized to bridge adjacent orifice ridge segments to shut-off fluid flow in the fully closed condition. The orifice ridges are coplanar and may be lapped to provide a smooth surface for the control plate to seat against. The flow-through control plate is especially useful in fast acting proportional control applications such as gas delivery in semiconductor manufacturing.

According to an example not claimed a control plate comprises a control plate body formed as a basically circular disk having a flat side, wherein the control plate body is pierced through by at least one fluid passageway, and the at least one fluid passageway extends from the flat side to an opposed side. Enhanced leak tightness in the valve shut-off condition may additionally be provided by selectively incorporating into the control plate materials softer than the material comprising the orifice ridge. Those softer materials may be a polymer material molded into features formed in a metallic control plate.

According to another example not claimed a valve assembly comprises a valve body including nested orifice ridges defining an intermediate valve chamber portion between the orifice ridges which is fluidly connected to a fluid passageway, and a control plate including at least one fluid passageway through the control plate, wherein the at least one fluid passageway through the control plate enables controlled flow of a fluid between the an inner valve chamber portion located inside both nested orifice ridges and an outer valve chamber portion located outside both nested orifice ridges, so that some of the controlled fluid flow sweeps through possibly stagnant volumes within the complete valve assembly.

According to an embodiment of the invention defined in claim 1, a control plate for a high-conductance valve comprises a control plate body formed as a basically circular disk having a flat side and an opposed side opposite the flat side, the control plate configured to be moved within a valve by an actuator, the flat side having a continuous uninterrupted flat portion to shut-off fluid flow in the valve; a centered mounting hole defined as a counterbore in the control plate body, the centered mounting hole terminating in a control plate through hole defined in the control plate body, the control plate through hole having a diameter that is less than a diameter of the centered mounting hole; a central insert received in the mounting hole; and at least one insert hole defined in the central insert, each insert hole in conjunction with the control plate through hole forming a fluid path for fluid to pass from the flat side through to the opposed side.

In some embodiments, the at least one insert hole includes a plurality of insert holes defined in the central insert.

In some embodiments, the plurality of insert holes are disposed about a center of the central insert so that a web of material of the central insert surrounds each of the plurality of insert holes.

In some embodiments, a central thru-hole extending through the center of the central insert, the central thru-hole being constructed to mount the central insert and the control plate body onto a control shaft.

In some embodiments, the control plate includes a plurality of fluid passageways disposed about a radially outer portion of the control plate body and extending substantially straight through the control plate body.

In some embodiments, the flat side includes a first continuous uninterrupted flat portion disposed between the control plate through hole and the plurality of fluid passageways and a second continuous uninterrupted flat portion disposed radially outward of the plurality of fluid passageways.

In some embodiments, a seat insert is received in the control plate body, and the plurality of fluid passageways being defined in the seat insert.

In some embodiments, the seat insert includes a disc that fills a circular groove formed in the control plate body, the seat insert including a first continuous uninterrupted flat portion disposed radially inward of the plurality of fluid passageways and a second continuous uninterrupted flat portion disposed radially outward of the plurality of fluid passageways.

In some embodiments, the seat insert further includes a plurality of pillars that are each received in one of a plurality of openings in the control plate body, each pillar extending from the disc, each of the fluid passageways extending through the pillars and the disc.

In some embodiments, the seat insert is formed from a polymer material, and the control plate body is formed from a metal or a metallic material.

In some embodiments, the central insert includes a concave bottom relief for guiding fluid from each insert hole to the control plate through hole.

In some embodiments, the central insert is axisymmetric.

In some embodiments, the central insert is secured in the mounting hole by one of a press fit, welding, and brazing.

According to another embodiment of the invention defined in claim 14, a valve assembly comprises, a valve body having a valve chamber, at least one first fluid conduit aperture in fluid communication with the valve chamber, at least one second fluid conduit aperture in fluid communication with the valve chamber, and at least one pair of adjacent orifice ridge segments, the at least one pair of adjacent orifice ridge segments extending from the valve body into the valve chamber and defining an intermediate valve chamber region between the at least one pair of adjacent orifice ridge segments; and a control plate including a control plate body having a first side and a second side opposed to the first side, the control plate body being movable between a closed position in which a surface region of the first side sealingly contacts the at least one pair of adjacent orifice ridge segments and an open position in which an open gap is present between the surface region and the at least one pair of adjacent orifice ridge segments; and the control plate further including a centered mounting hole defined as a counterbore in the control plate body, the centered mounting hole terminating in a control plate through hole defined in the control plate body, the control plate through hole having a diameter that is less than a diameter of the centered mounting hole; a central insert received in the mounting hole; and at least one insert hole defined in the central insert, each insert hole in conjunction with the control plate through hole forming a fluid path for fluid to pass from the flat side through to the opposed side.

In some embodiments, the at least one pair of adjacent orifice ridge segments includes two adjacent orifice ridge segments that are substantially circular in shape and further define an outer valve chamber portion disposed outside the two adjacent orifice ridge segments and an inner valve chamber portion disposed inside the two adjacent orifice ridge segments.

In some embodiments, the valve assembly further comprises a first fluid conduit in fluid communication with the at least one first fluid conduit aperture and a second fluid conduit in fluid communication with the at least one second fluid conduit aperture, wherein when the control plate body is in the closed position, the at least one first fluid conduit aperture is in fluid communication with the inner valve chamber portion, the at least one second fluid conduit aperture is in fluid communication with the intermediate valve chamber portion, and the surface region of the first side of the control plate body sealingly contacts the two adjacent orifice ridge segments to prevent fluid flow from flowing between the at least one first fluid conduit aperture and the at least one second fluid conduit aperture.

In some embodiments, the control plate body is in the closed position, the at least one insert hole and the control plate through hole provide fluid communication between the inner valve chamber portion and the outer valve chamber portion.

In some embodiments, the valve assembly further comprises a first fluid conduit in fluid communication with the at least one first fluid conduit aperture and a second fluid conduit in fluid communication with the at least one second fluid conduit aperture, wherein when the control plate body is in the closed position, the at least one first fluid conduit aperture is in fluid communication with the outer valve chamber portion, the at least one second fluid conduit aperture is in fluid communication with the intermediate valve chamber portion, and the surface region of the first side of the control plate body sealingly contacts the two adjacent orifice ridge segments to prevent fluid from flowing between the at least one first fluid conduit aperture and the at least one second fluid conduit aperture.

In some embodiments, when the control plate body is in the closed position, the at least one insert hole and the control plate through hole provide fluid communication between the outer valve chamber portion and the inner valve chamber portion.

In some embodiments, the at least one pair of adjacent orifice ridge segments includes four adjacent orifice ridge segments that are substantially circular in shape, the four adjacent orifice ridge segments including a largest orifice ridge segment, a first smaller orifice ridge segment surrounded by the largest orifice ridge segment, a second smaller orifice ridge segment surrounded by the first smaller orifice ridge segment, and a smallest orifice ridge segment surrounded by the second smaller orifice ridge segment, the four adjacent orifice ridge segments defining an outer valve chamber portion disposed outside the four adjacent orifice ridge segments, an inner valve chamber portion disposed inside the four adjacent orifice ridge segments, a first intermediate valve chamber portion disposed between the largest orifice ridge segment and the first smaller orifice ridge segment, a second intermediate valve chamber portion disposed between the first smaller orifice ridge segment and the second smaller orifice ridge segment, and a third intermediate valve chamber portion disposed between the second smaller orifice ridge segment and the smallest orifice ridge segment.

In some embodiments, the valve assembly further comprises a first fluid conduit in fluid communication with the at least one first fluid conduit aperture and a second fluid conduit in fluid communication with the at least one second fluid conduit aperture, wherein when the control plate body is in the closed position, the at least one first fluid conduit aperture is in fluid communication with the inner valve chamber portion, the at least one second fluid conduit aperture is in fluid communication with the first intermediate valve chamber portion and a first continuous uninterrupted flat portion of the surface region of the first side of the control plate body sealingly contacts the largest orifice ridge segment and the first smaller orifice ridge segment to prevent fluid from flowing between the at least one first fluid conduit aperture and the at least one second fluid conduit aperture.

In some embodiments, the valve body further includes at least one third fluid conduit aperture in fluid communication with the second fluid conduit, and wherein when the control plate body is in the closed position, the at least one third fluid conduit aperture is in fluid communication with the third intermediate valve chamber portion and a second continuous uninterrupted flat portion of the surface region of the first side of the control plate body sealingly contacts the second smaller orifice ridge segment and the smallest orifice ridge segment to prevent fluid from flowing between the at least one first fluid conduit aperture and the at least one third fluid conduit aperture.

In some embodiments, the control plate includes a plurality of fluid passageways disposed about a radially outer portion of the control plate body and extending substantially straight through the control plate body.

In some embodiments, the first continuous uninterrupted flat portion of the surface region of the first side of the control plate body is disposed between the control plate through hole and the plurality of fluid passageways and the second continuous uninterrupted flat portion of the surface region is disposed radially outward of the plurality of fluid passageways.

In some embodiments, when the control plate body is in the closed position, the at least one insert hole and the control plate through hole provide fluid communication between the inner valve chamber portion and the outer valve chamber portion, and the at least one insert hole, the control plate through hole, and the plurality of fluid passageways provide fluid communication between the inner valve chamber portion, the outer valve chamber portion, and the second intermediate valve chamber portion.

In some embodiments, a seat insert is received in the control plate body, the plurality of fluid passageways being defined in the seat insert.

In some embodiments, the seat insert includes a disc that fills a circular groove formed in the control plate body.

In some embodiments, the seat insert includes a plurality of pillars that are each received in one of a plurality of openings in the control plate body, each pillar extending from the first side to the second side, each of the fluid passageways being defined in a respective one of the pillars.

In some embodiments, the seat insert includes a disc that fills a circular groove formed in the control plate body.

In some embodiments, the seat insert is formed from a polymer material, and the control plate body is formed from a metal or metallic material.

In some embodiments, the central insert includes a concave bottom relief for guiding fluid from each insert hole to the control plate through hole.

In some embodiments, the central insert is axisymmetric.

In some embodiments, the central insert is secured in the mounting hole by one of a press fit, welding, and brazing.

### BRIEF DESCRIPTION OF DRAWINGS

FIG. 1A illustrates a plan view of a representative high-conductance valve body not claimed, having centered concentric orifice ridges;
FIG. 1B illustrates a cross-sectional view of the high-conductance valve body of FIG. 1 A taken along line I-I;
FIG. 1C illustrates a top perspective view of the high-conductance valve body of FIG. 1A;
FIG. 1D illustrates a top perspective cross-sectional view of the high-conductance valve body of FIG. 1 A taken along line I-I;
FIG. 2A illustrates a plan view of an embodiment of a control plate not claimed, with flow-through passages for a high-conductance valve;
FIG. 2B illustrates a cross-sectional view of the control plate of FIG. 2A taken along line II-II;
FIG. 2C illustrates a top perspective view of the control plate of FIG. 2A;
FIG. 2D illustrates a top perspective cross-sectional view of the control plate of FIG. 2A taken along line II-II;
FIG. 3A illustrates a plan view of another embodiment of a control plate not claimed, with flow through passages for a high-conductance valve;
FIG. 3B illustrates a cross-sectional view of the control plate of FIG. 3A taken along line III-III;
FIG. 3C illustrates a top perspective view of the control plate of FIG. 3A;
FIG. 3D illustrates a top perspective cross-sectional view of the control plate of FIG. 3A taken along line III- III;
FIG. 4A illustrates a plan view of an embodiment of a control plate not claimed, with flow-through passages in accordance with FIGS. 2A-D combined with a valve topworks installed atop a high- conductance valve body having concentric centered orifice ridges in accordance with FIGS. 1A- 1D;
FIG. 4B illustrates a cross-sectional view of the valve assembly of FIG. 4A taken along line IV-IV;
FIG. 4C illustrates a top perspective view of the valve assembly of FIG 4A;
FIG. 4D illustrates a top perspective cross-sectional view of the valve assembly of FIG. 4A taken along line IV-IV;
FIG. 5A illustrates a plan view of an embodiment of a control plate not claimed, with flow-through passages in accordance with FIGS. 3A-3D combined with a valve topworks installed atop a high-conductance valve body having centered concentric orifice ridges in accordance with FIGS. 1A-1D;
FIG. 5B illustrates a cross-sectional view of the valve assembly of FIG. 5A taken along line V-V;
FIG. 5C illustrates a top perspective view of the valve assembly of FIG 5A;
FIG. 5D illustrates a top perspective cross-sectional view of the valve assembly of FIG. 5A taken along line V-V;
FIG. 6A illustrates a plan view of another representative high-conductance valve body not claimed, having offset concentric orifice ridges;
FIG. 6B illustrates a cross-sectional view of the high-conductance valve body of FIG. 6A taken along line VI-VI;
FIG. 6C illustrates a top perspective view of the high-conductance valve body of FIG. 6A;
FIG. 6D illustrates a top perspective cross-sectional view of the high-conductance valve body of FIG. 6A taken along line VI- VI;
FIG. 7 A illustrates an embodiment of a control plate not claimed, with flow-through passages combined with a valve stroke amplifier disc;
FIG. 7B illustrates a cross-sectional view of the control plate and valve stroke amplifier disc of FIG. 7A taken along line VII- VII;
FIG. 7C illustrates a top perspective view of the control plate of the combined control plate and valve stroke amplifier disc of FIG. 7A;
FIG. 7D illustrates a top perspective cross-sectional view of the control plate of the combined control plate and valve stroke amplifier disc of FIG. 7A taken along line VII-VII;
FIG. 7E illustrates a top perspective view of the combined control plate and valve stroke amplifier disc of FIG. 7A;
FIG. 7F illustrates a top perspective cross-sectional view of the combined control plate and valve stroke amplifier disc of FIG. 7A taken along line VII-VII;
FIG. 8A illustrates a plan view of a control plate not claimed, with flow-through passages and amplifier disc in accordance with FIGS. 7A-7F combined with a valve topworks installed atop a high-conductance valve body having offset concentric orifice ridges in accordance with FIGS. 6A-6D;
FIG. 8B illustrates a cross-sectional view of the valve assembly of FIG. 8A taken along line VIII- VIII;
FIG. 8C illustrates a top perspective view of the valve assembly of FIG 8A;
FIG. 8D illustrates a top perspective cross-sectional view of the valve assembly of FIG. 8A taken along line VIII- VIII;
FIG. 9A illustrates a plan view of another embodiment of a control plate not claimed, with flow through passages for a high-conductance valve;
FIG. 9B illustrates a cross-sectional view of the control plate of FIG. 9A taken along line IX-IX;
FIG. 9C illustrates a top perspective view of the control plate of FIG. 9A;
FIG. 9D illustrates a top perspective cross-sectional view of the control plate of FIG. 9A taken along line IX-IX;
FIG. 10A illustrates a plan view of another representative high-conductance valve body not claimed, having two nested groups of concentric orifice ridges;
FIG. 10B illustrates a cross-sectional view of the high-conductance valve body of FIG. 10A taken along line X-X;
FIG. 10C illustrates a top perspective view of the high-conductance valve body of FIG. 10A;
FIG. 10D illustrates a top perspective cross-sectional view of the high-conductance valve body of FIG. 10A taken along line X-X;
FIG. 11 A illustrates a plan view of a control plate not claimed, with flow-through passages in accordance with FIGS. 9A-9D combined with a valve topworks installed atop a high- conductance valve body having nested groups of concentric orifice ridges in accordance with FIGS. 10A-10D;
FIG. 11B illustrates a cross-sectional view of the valve assembly of FIG. 11 A taken along line XI-XI;
FIG. 11C illustrates a top perspective view of the valve assembly of FIG 11 A;
FIG. 11D illustrates a top perspective cross-sectional view of the valve assembly of FIG. 11 A taken along line XI-XI;
FIG. 12A illustrates a plan view of another representative high-conductance valve body not claimed, having two nested groups of concentric orifice ridges;
FIG. 12B illustrates a cross-sectional view of the high-conductance valve body of FIG. 12A taken along line XII-XII;
FIG. 12C illustrates a top perspective view of the high-conductance valve body of FIG. 12A;
FIG. 12D illustrates a top perspective cross-sectional view of the high-conductance valve body of FIG. 12A taken along line XII-XII;
FIG. 13 A illustrates a plan view of another embodiment of a control plate as claimed, with flow through passages for a high-conductance valve;
FIG. 13B illustrates a cross-sectional view of the control plate of FIG. 13A taken along line XIII- XIII;
FIG. 13C illustrates an exploded top perspective view of the control plate of FIG. 13A showing two parts that comprise the control plate;
FIG. 13D illustrates a top perspective view of the control plate of FIG. 13A;
FIG. 13E illustrates a top perspective cross-sectional view of the control plate of FIG.13 A taken along line XIII- XIII;
FIG. 14A illustrates a plan view of a control plate with flow-through passages in accordance with FIGS. 13A-13E combined with a valve topworks installed atop a high-conductance valve body having nested groups of concentric orifice ridges in accordance with FIGS. 12A-12D;
FIG. 14B illustrates a cross-sectional view of the valve assembly of FIG. 14A taken along line XIV-XIV;
FIG. 14C illustrates a top perspective view of the valve assembly of FIG 14A;
FIG. 14D illustrates a top perspective cross-sectional view of the embodiment of FIG. 14A taken along line XIV-XIV;
FIG. 15A illustrates a plan view of another embodiment of a control plate as claimed, with flow through passages for a high-conductance valve;
FIG. 15B illustrates a cross-sectional view of the control plate of FIG. 15A taken along line XV-XV;
FIG. 15C illustrates an exploded top perspective view of the control plate of FIG. 15A showing three parts that comprise the control plate;
FIG. 15D illustrates a top perspective view of the control plate of FIG. 15A;
FIG. 15E illustrates a top perspective cross-sectional view of the control plate of FIG. 15A taken along line XV-XV;
FIG. 16A illustrates a plan view of a control plate with flow-through passages in accordance with FIGS. 15A-15E combined with a valve topworks installed atop a high-conductance valve body having nested groups of concentric orifice ridges in accordance with FIGS. 12A-12D;
FIG. 16B illustrates a cross-sectional view of the valve assembly of FIG. 16A taken along line XVI-XVI;
FIG. 16C illustrates a top perspective view of the valve assembly of FIG 16A;
FIG. 16D illustrates a top perspective cross-sectional view of the valve assembly of FIG. 16A taken along line XVI-XVI.

### DETAILED DESCRIPTION

This invention is not limited in its application to the details of construction and the arrangement of components set forth in the following description or illustrated in the drawings. The invention is capable of other embodiments and of being practiced or of being carried out in various ways. Also, the phrasing and terminology used herein is for the purpose of description and should not be regarded as limiting. The use of"including,""comprising," or"having," "containing,""involving," and variations thereof herein, is meant to encompass the items listed thereafter and equivalents thereof as well as additional items. The use of directional adjectives "inner,"outer,''''upper,''''lower,'' and like terms, are meant to assist with understanding relative relationships among design elements and should not be construed as meaning an absolute direction in space nor regarded as limiting.

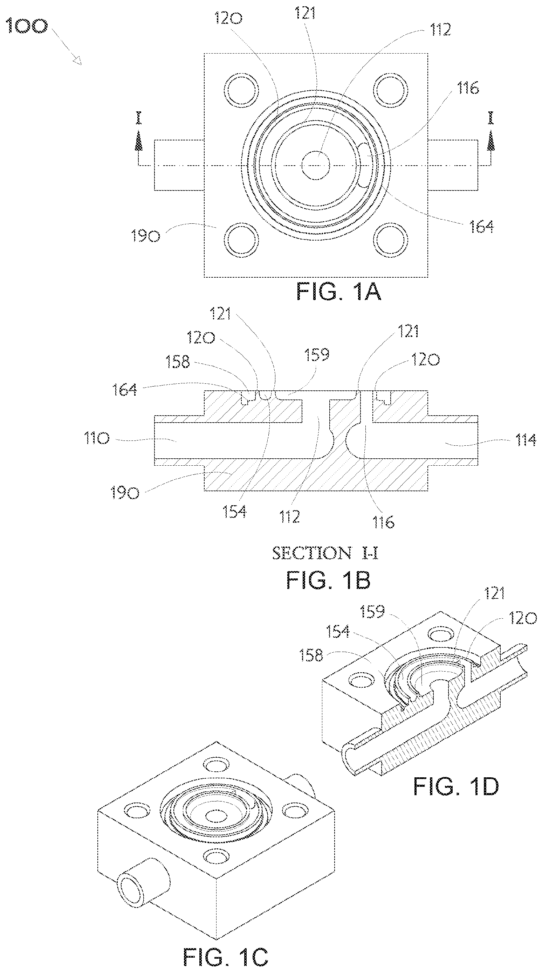

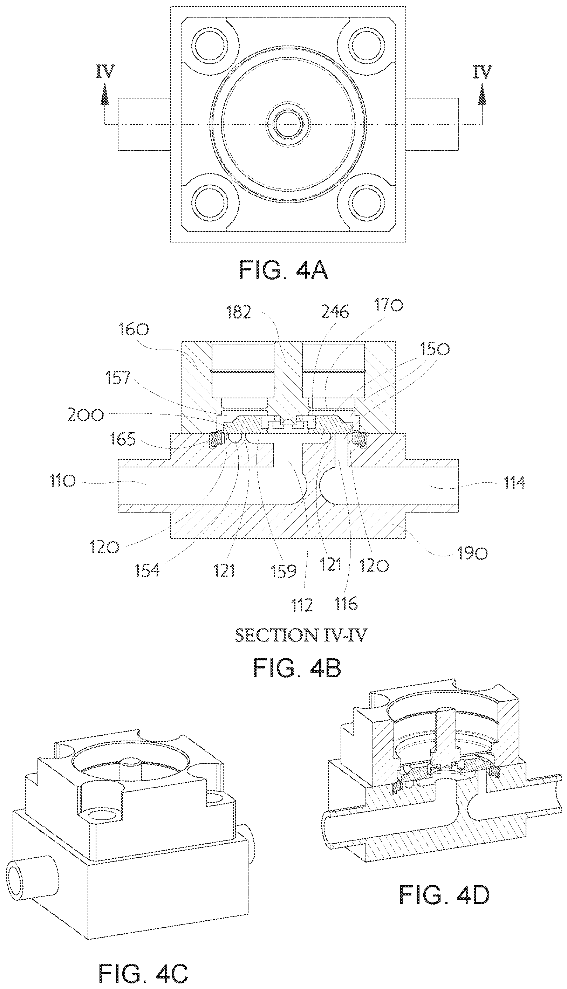

A representative example not claimed, of a high-conductance valve body 190 having centered concentric orifice ridges 120, 121 is illustrated in FIGS. 1A-1D. A more complete exemplary valve assembly 100 may have a topworks including a valve housing 160 removably joined to the valve body 190 by deforming a metallic gasket 165 as a leak- free assembly further illustrated in FIGS. 4A-4D. The topworks may include an actuator (not shown) chosen for a specific application. For example, a pneumatic actuator might be used for a simple on-off high-conductance valve, but a piezoelectric actuator might be used for a proportional control high-conductance valve adapted to a mass flow controller electronics system. Open cavities 154, 158, 159 formed in an upper surface of the valve body 190 may be considered as lower portions of a valve chamber 150 while an upper portion 157 of the valve chamber is formed in a lower surface of the valve housing 160 thereabove. A large orifice ridge 120 formed as a circular upward projection from the valve body 190 separates an outer valve chamber portion 158 from an intermediate valve chamber portion 154 which is surrounded by the large orifice ridge 120. A generally concentric small orifice ridge 121 is also formed as a circular upward projection from the valve body 190 surrounded by the large orifice ridge 120 and further separates an inner valve chamber portion 159 from the intermediate valve chamber portion 154. Throughout this disclosure a contiguous volume located between a pair of adjacent orifice ridge segments (e.g., between the large orifice ridge 120 and the small orifice ridge 121) may be referred to as an intermediate valve chamber portion, an adjacent contiguous volume disposed outside the pair (or pairs) of adjacent orifice ridge segments may be referred to as an outer valve chamber portion (e.g., 158), and an adjacent contiguous volume disposed inside the pair (or pairs) of adjacent orifice ridge segments may be referred to as an inner valve chamber portion (e.g., 159) for purposes of identification only and is not indicative of the direction of fluid flow. A gasket sealing region 164 may be formed in the upper surface of the valve body 190 to receive the metallic gasket 165 adjacent the periphery of the outer valve chamber portion 158.

The exemplary valve 100 may further comprise a first fluid conduit 110 (typically an inlet) and a second fluid conduit 114 (typically an outlet), both which conduits communicate fluid to the valve chamber 150, a valve chamber sealing diaphragm 170, and a control element moveable by deflection of the valve chamber sealing diaphragm 170. The moveable control element may be comprised of a control plate 200 (further described below) affixed to a control shaft 182 that is affixed to the diaphragm 170. In the design of the exemplary valve 100, a first fluid conduit aperture 112 provides fluid communication between the inner valve chamber portion 159 and the first fluid conduit 110. Similarly, a second fluid conduit aperture 116 provides fluid communication between the intermediate valve chamber portion 154 and the second fluid conduit 114. In the present illustrations of FIGS. 4A-4D not claimed,, the valve 100 is completely closed in a shut-off no-flow condition so the control plate 200 is shown contacting both the large orifice ridge 120 and the small orifice ridge 121. Designers will appreciate the first fluid conduit 110 and second fluid conduit 114 may provide fluid passage to a surface mount component interface rather than the tube stubs illustrated. The K1S and W-Seal are surface mount component interface examples well known in semiconductor capital equipment design and therefore not illustrated in the drawings of this disclosure. The parts comprising said valve may be constructed from materials chosen for desired chemical inertness relative to the fluids to be handled and may include, for example, stainless steels, Monel^{®} metals, titanium alloys, Hastelloy^{®} alloys, Elgiloy^{®}, brass, or polymers such as Teflon^{®}, Kel-F^{®}, Vespel^{®}, Kynar^{®}, and combinations of metals and polymers either separate or together. For example, a type 316F stainless steel valve body 190 may be used with a Hastelloy^{®} nickel alloy control plate 200 and an Elgiloy^{®} cobalt alloy sealing diaphragm 170.

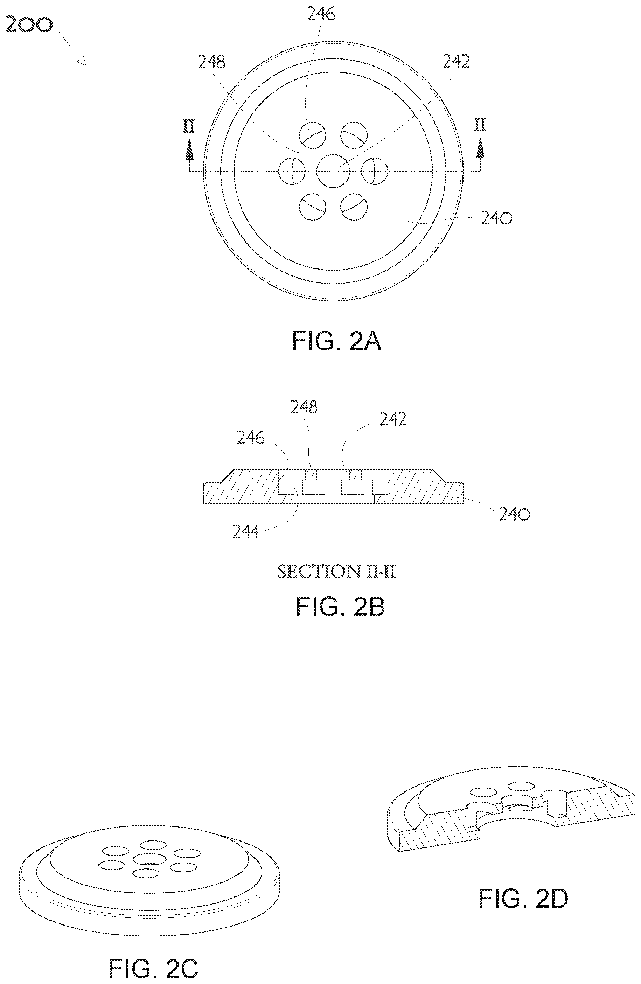

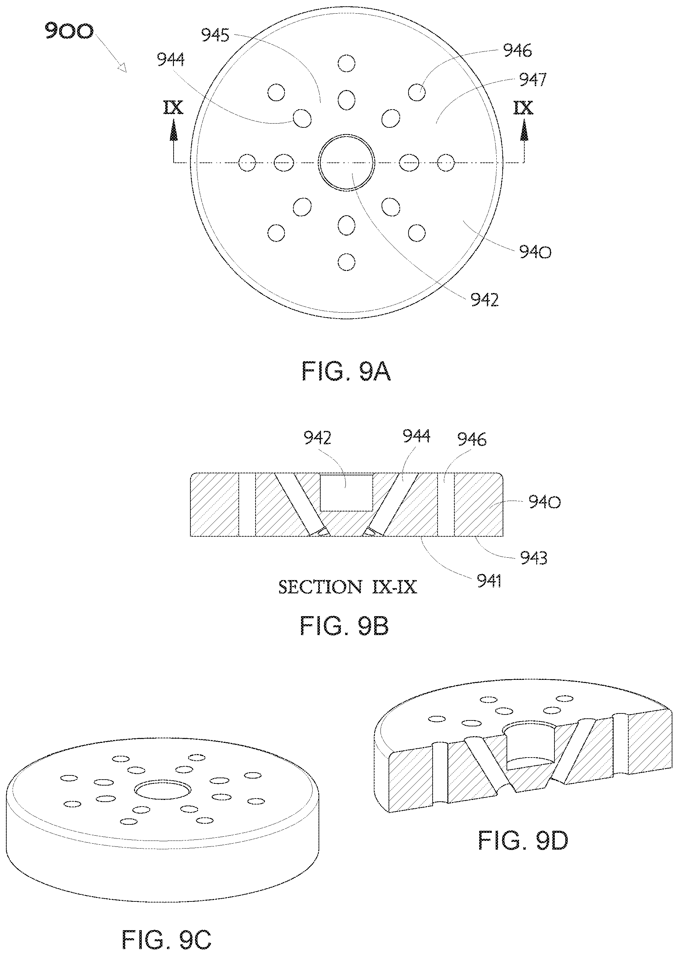

An example of a flow-through control plate 200 not claimed, illustrated in FIGS. 2A-2D comprises a control plate body 240 formed as a basically circular disk having one or more features on the opposed sides of the disk. Those features may include a central thru-hole 242, a counterbore 244, and one or more top holes 246. The counterbore 244 would typically be centered and usually be formed in a flat disk side intended to face the orifice ridges 120,121. The one or more top holes 246 may pierce the control plate body 240 from the opposite disk side and thereby leave one or more webs 248 between the central thru-hole 242 and the control plate body 240. Alternatively, the top holes 246 may be placed to intersect the counterbore 244 while also leaving one or more webs 248 between the central thru-hole 242 and the rest of the control plate body 240. The webs 248 bridge over the counterbore 244. In either case the top holes 246 constitute fluid passageways through which fluid may pass from one side of the control plate body 240 to the opposite side without need to transit around the outside diameter periphery. As illustrated in FIGS. 4A-4D, the control plate 200 may be mounted onto a stub of the control shaft 182 and thereby suspended within the valve chamber 150. Any suitable mounting method may be used such as press fit (see, for example, FIGS. 9A-9D), swaging the head of the stub, a threaded fastener, welding, or similar design choices according to the desires of a practitioner, so long as the fluid passageways through the top holes 246 are not obscured. It should be appreciated that, rather than the control plate being mounted to the stub of the control shaft 182 using a through hole 242 as shown in FIGS. 2A-2D, a blind hole mounting may instead be used as depicted in FIGS. 9A-9D.

The manner of controlling fluid flow may be further understood by considering the inner valve chamber portion 159 surrounded by the small orifice ridge 121, being connected by the first fluid conduit aperture 112 in fluid communication with the first fluid conduit 110, whereby at least a portion of the control plate 200 may be moved toward or away from the small orifice ridge 121 to create a first control gap (not shown) through which a first fluid portion may controllably flow. The controllable first fluid portion may transit directly to the intermediate valve chamber portion 154 through the first control gap from the inner valve chamber portion 159 from whence it may exit through an offset second fluid conduit aperture 116 in fluid communication with the second fluid conduit 114. In the present example valve 100, an actuator (not shown) may apply a force to the control shaft 182 to deflect the diaphragm 170 and thereby modulate the conductance through the valve 100 by changing the first control gap.

Simultaneous with the preceding described flow of the first fluid portion, moving at least a portion of the control plate 200 toward or away from the large orifice ridge 120 similarly creates a second control gap (not shown) through which a second fluid portion may controllably flow. The controllable second fluid portion may transit from the inner valve chamber portion 159 through the top holes 246 of the control plate 200 and sweep through the upper valve chamber portion 157 into the outer valve chamber portion 158 from whence the second fluid portion may exit through the second control gap into the intermediate valve chamber portion 154. Upon reaching the intermediate valve chamber portion 154, the controllable second fluid portion also may exit through the offset second fluid conduit aperture 116 in fluid communication with the second fluid conduit 114. Thus in the present example valve 100, the actuator (not shown) applying a force to the control shaft 182 and deflecting the diaphragm 170 thereby additionally modulates the conductance through the valve 100 by changing the second control gap. It should be appreciated that while the valve 100 is closed, fluid may pass through the holes in the control plate 200, but cannot go further. When the valve 100 is closed, fluid cannot pass from the first fluid conduit 110 to the second fluid conduit 114.

Designers may appreciate the large 120 and small 121 orifice ridges need merely be nested rather than exactly concentric; moreover, the nested pair of orifice ridges 120,121 may be placed asymmetrically with respect to the shape and dimensions of the internal valve chamber 150. The flow-through control plate 200 of course needs to have a continuous uninterrupted surface region, on the lower flat side of the disk shaped body 240, sufficient to span between contacting the large 120 and small 121 orifice ridges and cover the entire intermediate valve chamber portion 154. A single orifice ridge of non-circular shape (not shown) may also have adjacent segments enclosing an intermediate valve chamber portion that a flow-through control plate can entirely cover. Designers will also appreciate the described directions of fluid flow, progressing from the first fluid conduit 110 to the second fluid conduit 114, are used for convenience and clarity but are not limiting. Fluid may flow in an opposite direction, from the second fluid conduit 114 to the first fluid conduit 110, and the complete valve chamber 150 will still be beneficially swept by the controllable fluid flow. The valve design illustrated in FIGS. 4A-4D substantially eliminates any concerns about internal dead space versus swept volumes and may also improve dynamic response of the exemplary valve design. The flow-through control plate enables the use of nested orifice ridges 120,121 that together create total control gap length nearly double the circumference of a single large orifice while substantially reducing the area which must be closed to achieve shut-off. This combination provides high-conductance with low closing force. It should be appreciated that in a diaphragm sealed valve of the type illustrated in FIGS. 4A-4D, the amount of axial displacement (e.g., upward and downward in the cross-sectional view of FIG. 4B) of the control plate 200 is quite limited (e.g., about 50 pm for a piezoelectric actuated valve and about 200 pm for a solenoid actuated valve). The use of nested orifice ridges thus permits higher conductance that is nearly double that which could be achieved with only a single orifice ridge.

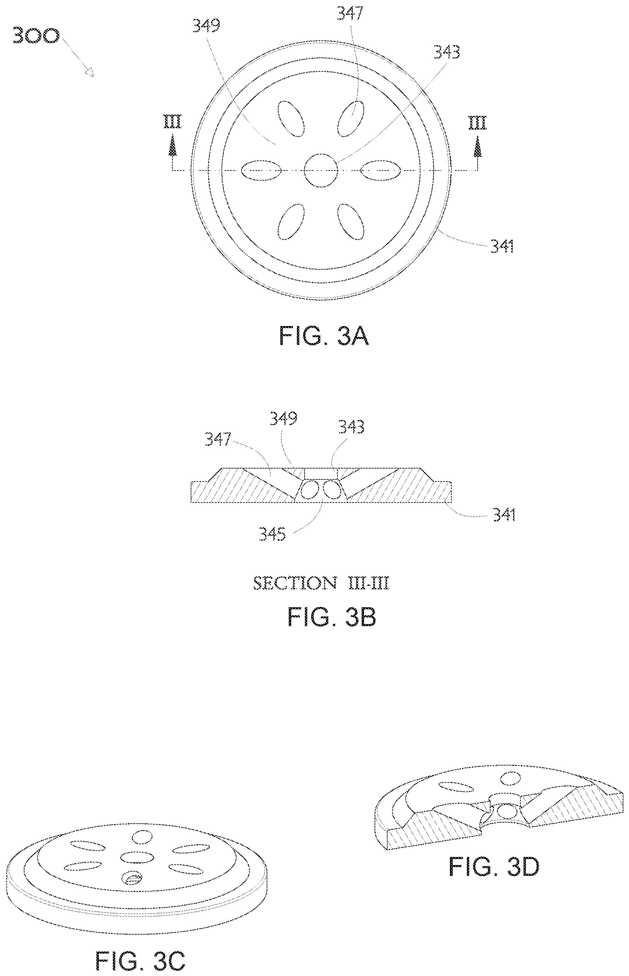

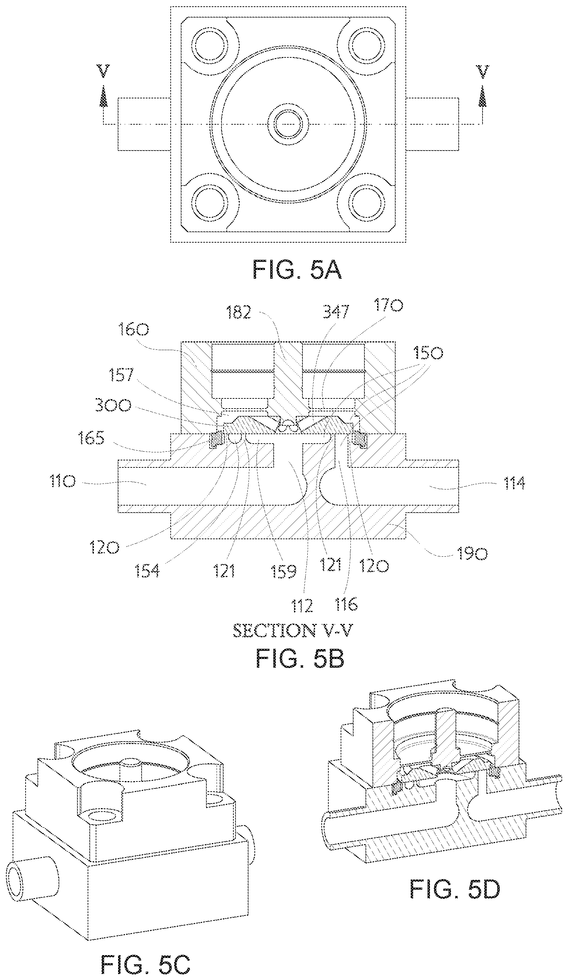

Another example of a flow-through control plate 300 not claimed, is illustrated in FIGS. 3A-3D and comprises a control plate body 341 formed as a basically circular disk having one or more features on the opposed sides of the disk. Those features may include a central thru-hole 343, a spherical pocket (or recess) 345, and one or more angled top holes 347. The spherical pocket 345 would typically be centered and usually be formed in a flat disk side intended to face the orifice ridges 120,121. The one or more angled top holes 347 may pierce the control plate body 341 from the spherical pocket 345 to the opposite disk side and thereby leave one or more webs 349 between the central thru-hole 343 and the rest of the control plate body 341. The webs 349 bridge over the spherical pocket 345. The spherical pocket 345 is useful when drilling the angled top holes 347 because entry of those angled holes may be locally perpendicular to the pocket surface thereby minimizing drill wobble or bending. The angled top holes 347 constitute fluid passageways through which fluid may pass from one side of the control plate body 341 to the opposite side without need to transit around the outside diameter periphery. As illustrated in FIGS. 5A-5D, the control plate 300 maybe be mounted onto a stub of the control shaft 182 and thereby suspended within the valve chamber 150. Any suitable mounting method may be used such as press fit (see, for example, FIGS. 9A-9D), swaging the stub head, a threaded fastener, welding, or similar design choices according to the desires of a practitioner, so long as the fluid passageways through the angled top holes 347 are not obscured. It should be appreciated that, rather than the control plate being mounted to the stub of the control shaft 182 using a through hole 343 as shown in FIGS. 3A-3D, a blind hole mounting may instead be used as depicted in FIGS. 9A-9D.

The manner of controlling fluid flow for the valve assembly illustrated in FIGS. 5A-5D, using the exemplary flow-through control plate 300, may be further understood as essentially identical to that described for the valve assembly illustrated in FIGS. 4A-4D using the earlier mentioned exemplary flow-through control plate 200. A controllable first fluid portion may transit directly to the intermediate valve chamber portion 154 through a first control gap (not shown) from the inner valve chamber portion 159 from whence it may exit through an offset second fluid conduit aperture 116 in fluid communication with the second fluid conduit 114. Particular to the flow-through control plate design 300, a controllable second fluid portion may transit from the inner valve chamber portion 159 through the angled top holes 347 of the control plate 300 to sweep through the upper valve chamber portion 157 into the outer valve chamber portion 158, from whence the second fluid portion may exit through the second control gap into the intermediate valve chamber portion 154. The flow-through control plate 300 also needs to have a continuous uninterrupted surface region, on the lower flat side of the disk shaped body 341, sufficient to span between contacting the large 120 and small 121 orifice ridges and cover the entire intermediate valve chamber portion 154. Designers will also appreciate the described directions of fluid flow are used for convenience and clarity but are not limiting in the exemplary valve assembly illustrated in FIGS. 5A-5D. Fluid may flow in an opposite direction and the complete valve chamber 150 will still be beneficially swept by the controllable fluid flow. The valve assembly design illustrated in FIGS. 5A-5D substantially eliminates any concerns about internal dead space versus swept volumes and may also improve dynamic response of the exemplary valve design. The flow-through control plate enables the use of nested orifice ridges 120,121 that together create total control gap length nearly double the circumference of a single large orifice while substantially reducing the area which must be closed to achieve shut-off. This combination provides high-conductance with low closing force.

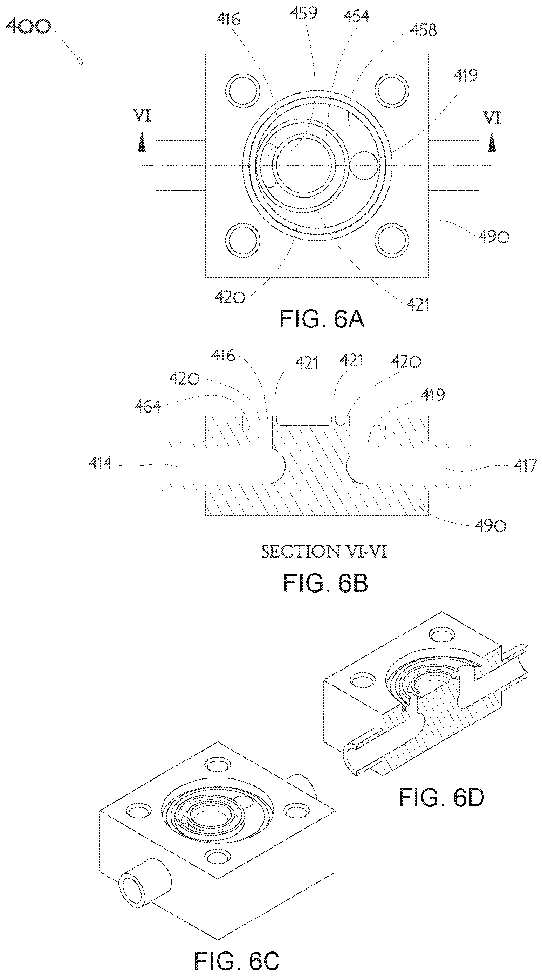

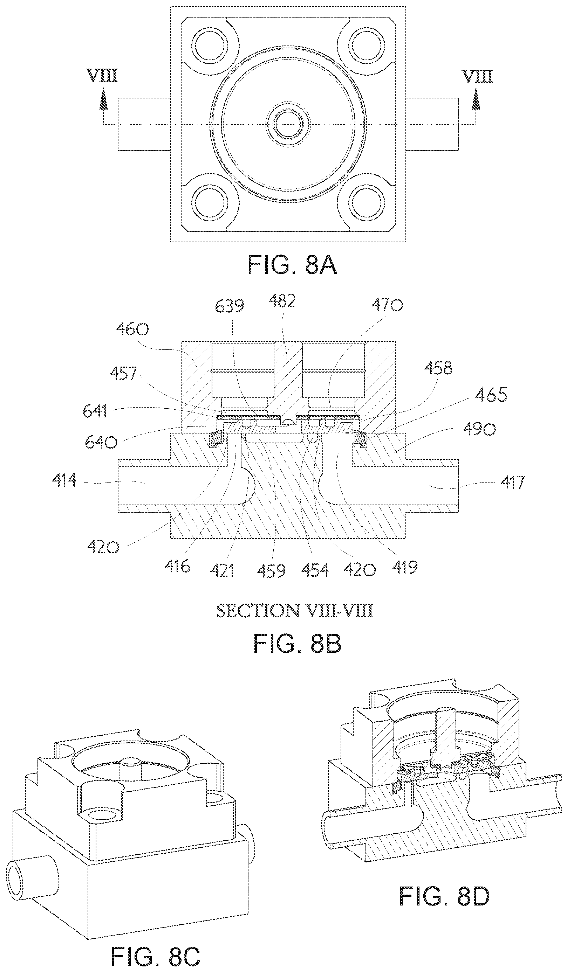

A representative example of another high-conductance valve body 490 not claimed, having nested orifice ridges 420, 421 is illustrated in FIGS. 6A-6D. A more complete exemplary valve assembly 400 may have a topworks including a valve housing 460 removably joined to the valve body 490 by deforming a metallic gasket 465 as a leak-free assembly further illustrated in FIGS. 8A-8D. The topworks may include an actuator (not shown) chosen for a specific application.

For example, a pneumatic actuator might be used for a simple on-off high-conductance valve, but a piezoelectric actuator might be used for a proportional control high-conductance valve adapted to a mass flow controller electronics system. Open cavities 454, 458, 459 formed in an upper surface of the valve body 490 may be considered as lower portions of a valve chamber while an upper portion 457 of the valve chamber is formed in a lower surface of the valve housing 460 thereabove. A large orifice ridge 420 formed as a generally circular upward projection offset within the valve body 490 separates an outer valve chamber portion 458 from an intermediate valve chamber portion 454 which the large orifice ridge 420 surrounds. A nested small orifice ridge 421 also formed as a circular upward projection from the valve body 490 further separates an inner valve chamber portion 459 from the intermediate valve chamber portion 454 which surrounds it. A gasket sealing region 464 may be formed in the upper surface of the valve body 490 to receive the metallic gasket 465 adjacent the periphery of the outer valve chamber portion 458.

The exemplary valve 400 may further comprise a first fluid conduit 417 (typically an inlet) and a second fluid conduit 414 (typically an outlet), both which conduits communicate fluid to the valve chamber, a valve chamber sealing diaphragm 470, and a control element moveable by deflection of the valve chamber sealing diaphragm 470. The control element may be comprised of a control plate 600 (further described below) including a valve stroke amplifier mechanism affixed to a control shaft 482 that is affixed to the diaphragm 470. In the design of the exemplary valve 400, a first fluid conduit aperture 419 provides fluid communication between the outer valve chamber portion 458 and the first fluid conduit 417. Similarly, a second fluid conduit aperture 416 provides fluid communication between the intermediate valve chamber portion 454 and the second fluid conduit 414. In the present illustrations of FIGS. 8A-8D the valve assembly 400 is completely closed in a shut-off no-flow condition so the control plate 600 is shown contacting both the large orifice ridge 420 and the small orifice ridge 421. Designers will appreciate the first fluid conduit 417 and the second fluid conduit 414 may provide fluid passage to a surface mount component interface rather than the tube stubs illustrated. The K1S and W-Seal are surface mount component interface examples well known in semiconductor capital equipment design and therefore not illustrated in the drawings of this disclosure. The parts comprising said valve may be constructed from materials chosen for desired chemical inertness relative to the fluids to be handled and may include, for example, stainless steels, Monel^{®} metals, titanium alloys, Hastelloy^{®} alloys, Elgiloy^{®}, brass, or polymers such as Teflon^{®}, Kel-F^{®}, Vespel^{®}, Kynar^{®}, and combinations of metals and polymers either separate or together. For example, a type 316L stainless steel valve body 490 may be used with a Hastelloy^{®} nickel alloy control plate 600 and an Elgiloy^{®} cobalt alloy sealing diaphragm 470.

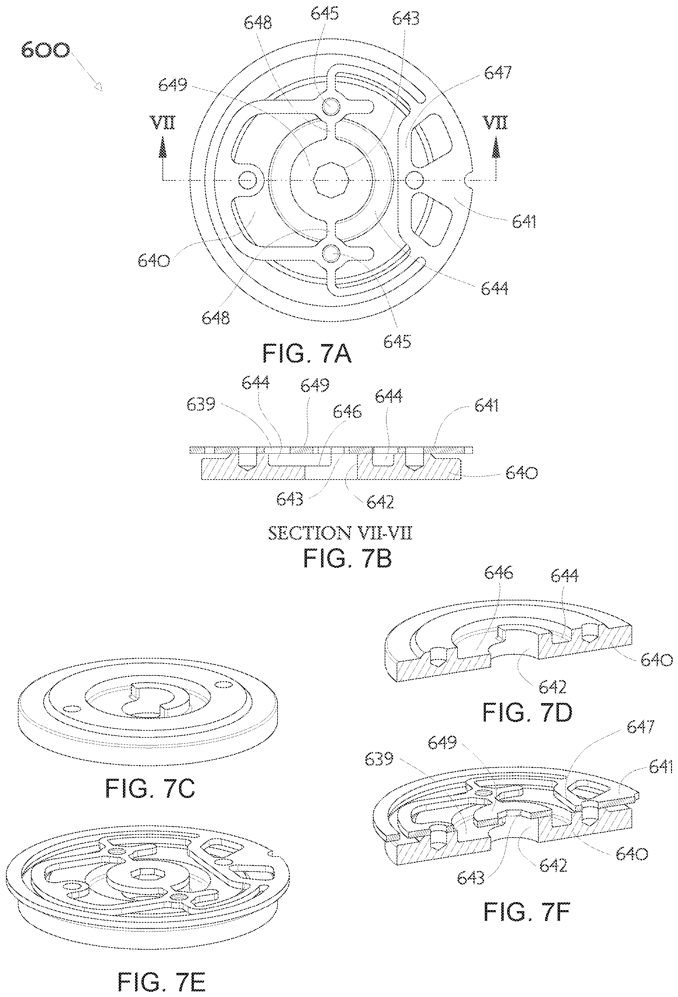

Another example of a flow-through control plate 600 not claimed, illustrated in FIGS. 7A-7F, and included in FIGS. 8A-8D, comprises a control plate body 640 and a Valve Stroke Amplification Mechanism amplifier disc 641 as described in United States Patent Application No. 14/932,086 filed by the present inventor Kim Ngoc Vu on November 4, 2015. As illustrated in FIGS. 7A-7F the control plate body 640 is formed as a basically circular disk with features which include a central thru-hole 642, a ring-shaped groove 644, and a top relief 646. The ring-shaped groove 644 and top relief 646 are formed in the disk side opposite the flat side intended to face one or more orifice ridges. The top relief 646 is placed to intersect the ring-shaped groove 644 and a portion of the central thru-hole 642 thereby providing an open fluid passageway through which fluid may pass from one side of the control plate body 640 to the opposite side without need to transit around its outside diameter periphery. The amplifier disc 641 is described in detail within the cited U. S. Pat. App. No. 14/932,086. Amplifier disc features of interest for the instant application include a lifting hole 643, a passive segment, an active segment 649, a void passageway 639 adjacent the active segment, attachment points 645, and torsion bars 648. The control plate body 640 and amplifier disc 641 are attached to each other by welding at the two attachment points 645 whereby the torsion bars 648 and active segment 649 constitute a web that bridges over a portion of the top relief 646 and ring-shaped groove 644. A portion of the void passageway 639 is directly next to the top relief 646 thereby providing a fluid pathway through which fluid may pass from one side of the control plate 600 to the opposite side without need to transit around the outside diameter periphery of the assembly. As illustrated in FIGS. 8A-8D, the control plate 600 may be mounted onto a stub of the control shaft 482 using the stroke amplifier disc lifting hole 643 and thereby suspended within the valve chamber . Any suitable mounting method may be used such as press fit, swaging the stub head, a threaded fastener, welding, or similar design choices according to the desires of a practitioner, so long as the fluid passageway through the top relief 646 and amplifier disc void passageway 639 is not obscured.

A force from a topworks actuator (not shown) applied at the amplifier disc lifting hole 643 in the active segment 649 will be communicated to the attachment points 645 by the torsion bars 648. When such applied force is a lifting instance, the passive segment 647 will hold downward an off center first portion of the flow-through control plate body 640 while a diametrically opposite second portion is lifted upward by the diametrical force imparted at the attachment points 645. The resulting motion will open a wedge-like gap between the control plate planar bottom surface and both the large 420 and small 421 orifice ridges in the exemplary valve 400 illustrated in FIGS. 8A-8D. When the valve 400 is in a closed condition (as shown in FIGS. 8A-8D) the various amplifier disc elements are nominally coplanar and the flow-through control plate body 640 contacts the large 420 and small 421 orifice ridges.

The manner of controlling fluid flow may be further understood by considering the outer valve chamber portion 458 fed by the first fluid conduit aperture 419 in fluid communication with the first fluid conduit 417, whereby at least a portion of the control plate 600 may be moved toward or away from the large orifice ridge 420 to create a wedge-like first control gap (not shown) through which a first fluid portion may controllably flow. The controllable first fluid portion may transit directly from the outer valve chamber portion 458 through the first control gap into the intermediate valve chamber portion 454 from whence it may exit through the second fluid conduit aperture 416 in fluid communication with the second fluid conduit 414. In the present example valve 400, an actuator (not shown) may apply a force to the control shaft 482 to deflect the diaphragm 470 and thereby modulate the conductance through the valve 400 by changing the first control gap. It should be appreciated that while the valve 400 is closed, fluid may pass from the first fluid conduit 417, through the first fluid conduit aperture 419, around an outer periphery of the control plate 600, into the outer valve chamber portion 458 and the upper portion 457 of the valve chamber and through the holes in the control plate 600 to the inner valve chamber portion 459, but cannot go further. Thus, when the valve 400 is closed, fluid cannot pass from the first fluid conduit 417 to the second fluid conduit 414.

Simultaneous with the preceding described flow of the first fluid portion, moving at least a portion of the control plate 600 toward or away from the small orifice ridge 421 similarly creates a wedge-like second control gap (not shown) through which a second fluid portion may controllably flow. The controllable second fluid portion may transit from the outer valve chamber portion 458 sweeping through the upper valve chamber portion 457 and then through the control plate 600, via the amplifier disc void passageway 639 and the top relief 646 of the control plate body 640, into the inner valve chamber portion 459, and then the controllable second fluid portion may transit from the inner valve chamber portion 459 through the second control gap into the intermediate valve chamber portion 454 from whence the second fluid portion may exit through the second conduit aperture 416 in fluid communication with the second fluid conduit 414. Thus in the present example valve 400, the actuator (not shown) applying a force to the control shaft 482 and deflecting the diaphragm 470 thereby additionally modulates the conductance through the valve 400 by changing the second control gap. Designers will also appreciate the described directions of fluid flow are used for convenience and clarity but are not limiting in the exemplary valve assembly illustrated in FIGS. 8A-8D. Fluid may flow in an opposite direction and the complete valve chamber 450 will still be beneficially swept by the controllable fluid flow. The valve design illustrated in FIGS. 8A-8D substantially eliminates any concerns about internal dead space versus swept volumes and may also improve dynamic response of the exemplary valve design. The flow-through control plate enables the use of nested orifice ridges 420,421 that together create total control gap length nearly double the circumference of a single large orifice while substantially reducing the area which must be closed to achieve shut-off. This combination provides high-conductance with low closing force.

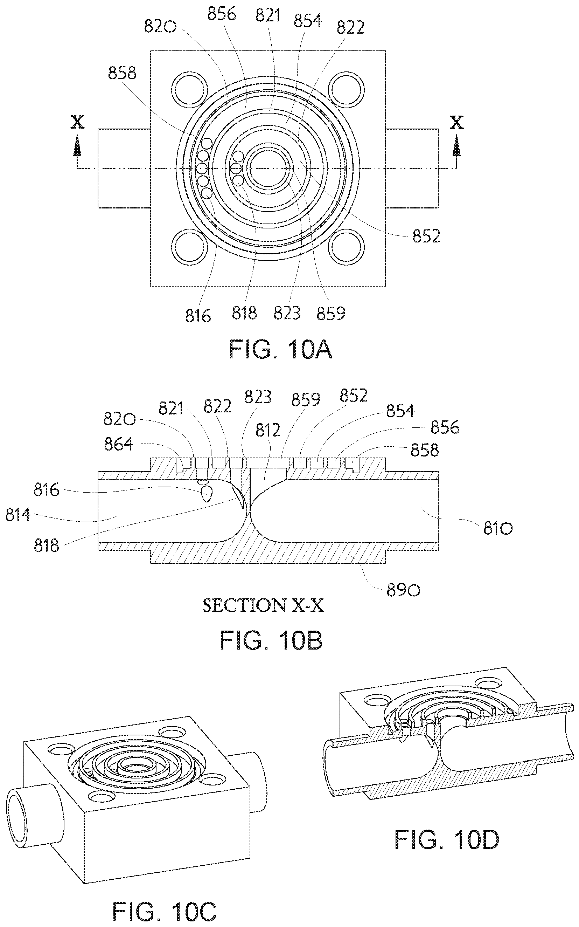

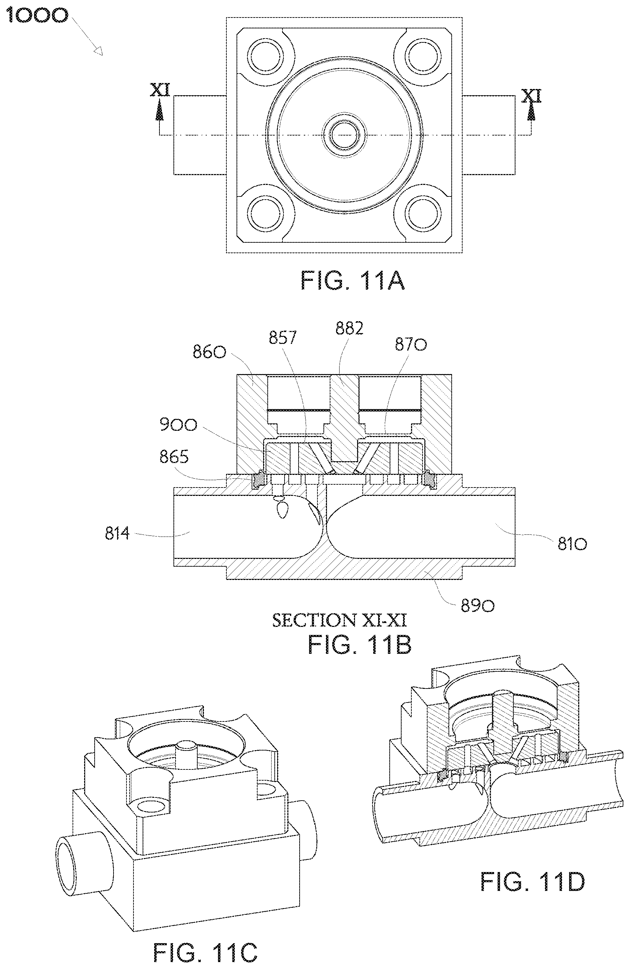

A representative example of another high-conductance valve body 890 not claimed, having two nested groups of centered concentric orifice ridges 820, 821, 822, 823 is illustrated in FIGS. 10A-10D. A more complete exemplary valve assembly 1000 may have a topworks including a valve housing 860 removably joined to the valve body 890, by deforming a metallic gasket 865, as a leak-free assembly further illustrated in FIGS. 11A-11D. The topworks may include an actuator (not shown) chosen for a specific application. For example, a manual actuator might be used for a simple on-off high-conductance valve, but a piezoelectric or solenoid actuator might be used for a proportional control high-conductance valve adapted to a mass flow controller electronics system. Open cavities 852, 854, 856, 858, 859 formed in an upper surface of the valve body 890 may be considered as lower portions of a valve chamber while an upper portion 857 of the valve chamber is formed in a lower surface of the valve housing 860 thereabove. A largest orifice ridge 820 formed as a circular upward projection from the valve body 890 separates an outer valve chamber portion 858 from a first intermediate valve chamber portion 856 which is surrounded by the largest orifice ridge 820. A generally concentric first smaller orifice ridge 821 is also formed as a circular upward projection from the valve body 890 surrounded by the largest orifice ridge 820 and further separates an enclosed second intermediate valve chamber portion 854 from the first intermediate valve chamber portion 856. A generally concentric second smaller orifice ridge 822 is also formed as a circular upward projection from the valve body 890 surrounded by the first smaller orifice ridge 821 and further separates an enclosed third intermediate valve chamber portion 852 from the second intermediate valve chamber portion 854. A generally concentric smallest orifice ridge 823 is also formed as a circular upward projection from the valve body 890 surrounded by the second smaller orifice ridge 822 and further separates an inner valve chamber portion 859 from the third intermediate valve chamber portion 852. A gasket sealing region 864 may be formed in the upper surface of the valve body 890 to receive the metallic gasket 865 adjacent the periphery of the outer valve chamber portion 858.

The exemplary valve 1000 may further comprise a first fluid conduit 810 (typically an inlet) and a second fluid conduit 814 (typically an outlet), both which conduits communicate fluid to the valve chamber, a valve chamber sealing diaphragm 870, and a control element moveable by deflection of the valve chamber sealing diaphragm 870. The moveable control element may be additionally comprised of a control plate 900 (further described below) affixed to a control shaft 882 that is affixed to the diaphragm 870. In the design of the exemplary valve 1000, a first fluid conduit aperture 812 provides fluid communication between the inner valve chamber portion 859 and the first fluid conduit 810. Similarly, one or more second fluid conduit apertures 816 provide fluid communication between the first intermediate valve chamber portion 856 and the second fluid conduit 814. Also provided are one or more third inner fluid conduit apertures 818 which provide fluid communication between the third intermediate valve chamber portion 852 and the second fluid conduit 814. In the present illustration of FIGS. 11A-11D, the valve 1000 is completely closed in a shut-off no-flow condition so the control plate 900 is shown contacting all four orifice ridges: largest 820, first smaller 821, second smaller 822, and smallest 823. Designers will appreciate the first fluid conduit 810 and second fluid conduit 814 may provide fluid passage to a surface mount component interface rather than the tube stubs illustrated.

The K1S and W-Seal are surface mount component interface examples well known in semiconductor capital equipment design and therefore not illustrated in the drawings of this disclosure. The parts comprising said valve may be constructed from materials chosen for desired chemical inertness relative to the fluids to be handled and may include, for example, stainless steels, Monel^{®} metals, titanium alloys, Hastelloy^{®} alloys, Elgiloy^{®}, brass, or polymers such as Teflon^{®}, Kel-F^{®}, Vespel^{®}, Kynar^{®}, and combinations of metals and polymers either separate or together. For example, a type 316F stainless steel valve body 890 may be used with a Hastelloy^{®} nickel alloy control plate 900 and an Elgiloy^{®} cobalt alloy sealing diaphragm 870. Alternatively, the valve body, sealing diaphragm, and control plate body, may all be made from the same stainless steel alloy.

An example of a flow-through control plate 900 not claimed, illustrated in FIGS. 9A-9D comprises a control plate body 940 formed as a basically circular disk having one or more features on the opposed sides of the disk. Those features may include a central mounting hole 942 (blind or through), one or more first middle thru-holes 944, and one or more second middle thru-holes 946. As illustrated in FIGS. 11A-11D, the control plate 900 maybe be mounted onto a stub of the control shaft 882 and thereby suspended within the valve chamber. Any suitable mounting method may be used such as press fit, swaging the head of the stub, a threaded fastener, welding, or similar design choices according to the desires of a practitioner, so long as the fluid passageways formed by the first middle 944 and second middle 946 thru-holes are not obscured. It should be appreciated that, rather than the control plate 900 being mounted to the stub of the control shaft 882 using a blind hole as shown in FIGS. 9A-9D, a through hole mounting may instead be used as depicted in FIGS. 2A-2D, 3A-3D, and 7A-7F.

The one or more first middle thru-holes 944 pierce the control plate body 940 and typically are uniformly spaced around a constant diameter first circle surrounding the central mounting hole 942. The diameter of the first circle and diameter of the first middle thru-holes 944 are chosen so those thru-holes only cover the inner valve chamber portion 859 and do not overlap the adjacent smallest orifice ridge 823. Angle drilling the first middle thru-holes 944, as illustrated in FIGS. 9A-9D and FIGS. 11A-11D, allows use of larger diameter holes while not overlapping the smallest orifice ridge 823. It should be appreciated that although not shown, a spherical pocket or recess may be used to aid in drilling of the first middle thru-holes 944 in the manner discussed previously with respect to FIGS. 3A-3D. The first middle thru-holes 944 constitute fluid passageways through which fluid may pass from one side of the control plate body 940 to the opposite side without need to transit around the outside diameter periphery. More particularly, the first middle thru-holes 944 fluidly connect the inner valve chamber portion 859 with the upper valve chamber portion 857. Webs of material 945 between the one or more adjacent first middle thru -holes 944 provide mechanical connection from the central mounting hole 942 to a continuous uninterrupted first surface region 941, on the lower flat side of the disk shaped control plate body 940, that first surface region 941 having radial extent sufficient to span between contacting the second smaller orifice ridge 822 and the smallest orifice ridge 823 while covering the entire third intermediate valve chamber portion 852.

The one or more second middle thru-holes 946 pierce the control plate body 940 and typically are uniformly spaced around a constant diameter second circle further surrounding the first surface region 941 and first middle thru-holes 944. The diameter of the second circle and diameter of the second middle thru-holes 946 are chosen so those thru-holes only cover the second intermediate valve chamber portion 854 and do not overlap the adjacent first smaller orifice ridge 821 nor the second smaller orifice ridge 822. The second middle thru-holes 946 constitute fluid passageways through which fluid may pass from one side of the control plate body 940 to the opposite side without need to transit around the outside diameter periphery. More particularly, the second middle thru-holes 946 fluidly connect the second intermediate valve chamber portion 854 with the upper valve chamber portion 857. Webs of material 947 between the one or more adjacent middle thru-holes 946 provide mechanical connection from the first surface region 941 to a continuous uninterrupted second surface region 943, on the lower flat side of the disk shaped body 940, that second surface region 943 having radial extent sufficient to span between contacting the largest orifice ridge 820 and first smaller orifice ridge 821 while covering the entire first intermediate valve chamber portion 856.

The manner of controlling fluid flow may be further understood by considering the inner valve chamber portion 859 surrounded by the smallest orifice ridge 823, being fed by the first fluid conduit aperture 812 in fluid communication with the first fluid conduit 810, whereby at least a portion of the control plate 900 may be moved toward or away from the smallest orifice ridge 823 to create a first control gap (not shown) through which a first fluid portion may controllably flow. The controllable first fluid portion may transit directly into the third intermediate valve chamber portion 852 from whence it may exit through one or more third fluid conduit apertures 818 in fluid communication with the second fluid conduit 814. A second fluid portion may transit from the inner valve chamber portion 859 upward through the one or more first middle thru-holes 944 into the upper portion 857 of the valve chamber, and therefrom transit downward through the one or more second middle thru-holes 946 into the second intermediate valve chamber portion 854. Moving at least a portion of the control plate 900 toward or away from the second smaller orifice ridge 822 will create a second control gap (not shown) through which the second fluid portion may also controllably flow directly into the third intermediate valve chamber portion 852 from the second intermediate valve chamber portion 854 and then exit through one or more third fluid conduit apertures 818 in fluid communication with the second fluid conduit 814. In the present example valve 1000, an actuator (not shown) may apply a force to the control shaft 882 to deflect the diaphragm 870 and thereby modulate the conductance through the valve 1000 by changing the first control gap and the second control gap.

Simultaneous with the preceding described flow of the first fluid portion and second fluid portion, moving at least a portion of the control plate 900 toward or away from the largest orifice ridge 820 similarly creates a third control gap (not shown) through which a third fluid portion may controllably flow. The controllable third fluid portion may transit from the inner valve chamber portion 859 upward through the one or more first middle thru-holes 944 of the control plate 900 and sweep through the upper valve chamber portion 857 into the outer valve chamber portion 858 from whence the third fluid portion may exit through the third control gap into the first intermediate valve chamber portion 856. Upon reaching the first intermediate valve chamber portion 856 the controllable third fluid portion may exit through the one or more second fluid conduit apertures 816 in fluid communication with the second fluid conduit 814. A fourth fluid portion may transit from the inner valve chamber portion 859 upward through the one or more first middle thru-holes 944 into the upper portion 857 of the valve chamber, and therefrom transit downward through the one or more second middle thru-holes 946 into the second intermediate valve chamber portion 854. Moving at least a portion of the control plate 900 toward or away from the first smaller orifice ridge 821 will create a fourth control gap (not shown) through which the fourth fluid portion may also controllably flow directly into the first intermediate valve chamber portion 856 from whence it may exit through one or more second inner fluid conduit apertures 816 in fluid communication with the second fluid conduit 814. Thus in the present example valve 1000, the actuator (not shown) applying a force to the control shaft 882 and deflecting the diaphragm 870 thereby additionally modulates the conductance through the valve 1000 by changing the third control gap and the fourth control gap. It should be appreciated that while the valve 1000 is closed, fluid may pass through the holes in the control plate 900 and into the upper portion 857 of the valve chamber, the outer valve chamber portion 858 and the second intermediate valve chamber portion 854, but cannot go further. Thus, when the valve 1000 is closed, fluid cannot pass from the first fluid conduit 810 to the second fluid conduit 814.

Designers may appreciate the largest 820 and first smaller 821 orifice ridges need merely be nested rather than exactly concentric; moreover, the nested pair of orifice ridges 820,821 may be placed asymmetrically with respect to the shape and dimensions of the lower valve chamber. The flow-through control plate 900 of course primarily needs to have a continuous uninterrupted second surface region 943, on the lower flat side of the disk shaped body 940, sufficient to span between contacting the largest 820 and first smaller 821 orifice ridges and cover the entire first intermediate valve chamber portion 856. In similar fashion the second smaller 822 and smallest 823 orifice ridges need merely be nested rather than exactly concentric; moreover, the nested pair of orifice ridges 822,823 may be placed asymmetrically with respect to the shape and dimensions of the lower valve chamber. The flow-through control plate 900 of course primarily needs to have a continuous uninterrupted first surface region 941, on the lower flat side of the disk shaped body 940, sufficient to span between contacting the second smaller 822 and smallest 823 orifice ridges and cover the entire third intermediate valve chamber portion 852. Designers will also appreciate the described directions of fluid flow, progressing from the first fluid conduit 810 to the second fluid conduit 814, are used for convenience and clarity but are not limiting. Fluid may flow in an opposite direction, from the second fluid conduit 814 to the first fluid conduit 810, and the complete valve chamber will still be beneficially swept by the controllable fluid flow. The valve design illustrated in FIGS. 11A-11D substantially eliminates any concerns about internal dead space versus swept volumes and may also improve dynamic response of the exemplary valve design. The flow-through control plate enables the use of nested orifice ridges 820,821,822,823 that together create total control gap length about triple the circumference of a single large orifice while substantially reducing the area which must be closed to achieve shut off. This combination provides high-conductance with low closing force.

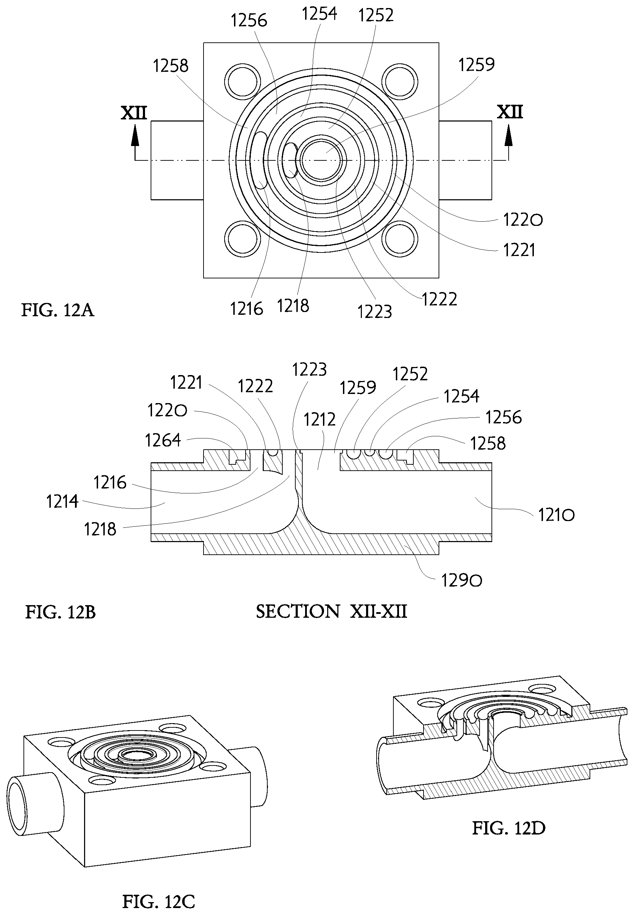

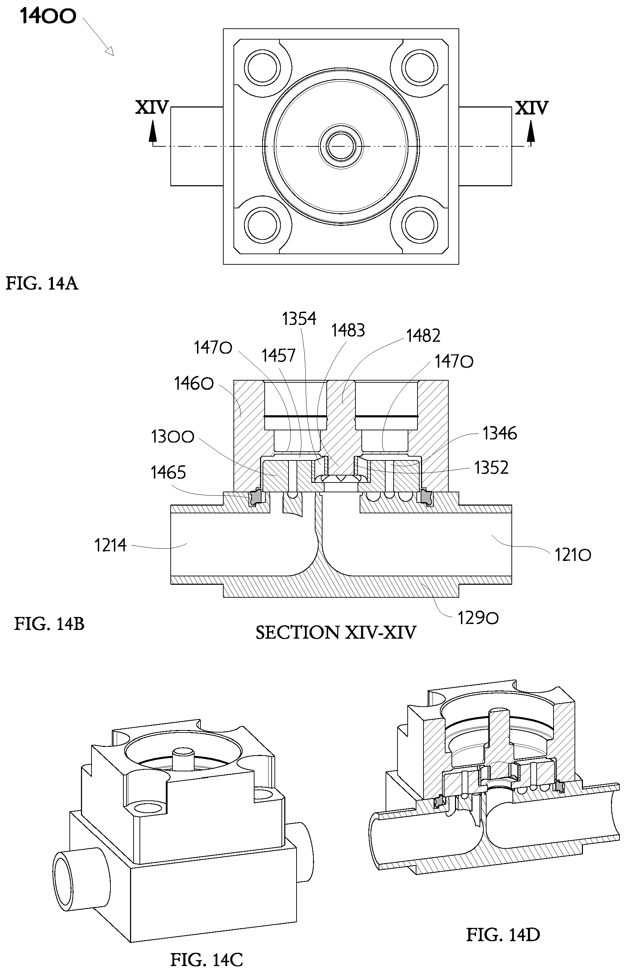

A representative example of another high-conductance valve body 1290 not claimed, having two nested groups of centered concentric orifice ridges 1220, 1221, 1222, 1223 is illustrated in FIGS. 12A-12D. A more complete exemplary valve assembly 1400 may have a topworks including a valve housing 1460 removably joined to the valve body 1290, by deforming a metallic gasket 1465, as a leak-free assembly further illustrated in FIGS. 14A-14D. The topworks may include an actuator (not shown) chosen for a specific application. For example, a manual or solenoid actuator might be used for a simple on-off high-conductance valve, but a piezoelectric actuator might be used for a proportional control high-conductance valve adapted to a mass flow controller electronics system. Open cavities 1252, 1254, 1256, 1258, 1259 formed in an upper surface of the valve body 1290 may be considered as lower portions of a valve chamber while an upper portion 1457 of the valve chamber is formed in a lower surface of the valve housing 1460 thereabove. Consideration of FIGS. 12A-12D will acquaint designers with the fact said open cavities 1252, 1254, 1256, 1258 appear as generally circular grooves which may be all the same depth, or may vary in depth compared one to another and around the extent of any specific circular groove. A largest orifice ridge 1220 formed as a circular upward projection from the valve body 1290 separates an outer valve chamber portion 1258 from a first intermediate valve chamber portion 1256 which is surrounded by the largest orifice ridge 1220. A generally concentric first smaller orifice ridge 1221 is also formed as a circular upward projection from the valve body 1290 surrounded by the largest orifice ridge 1220 and further separates an enclosed second intermediate valve chamber portion 1254 from the first intermediate valve chamber portion 1256. A generally concentric second smaller orifice ridge 1222 is also formed as a circular upward projection from the valve body 1290 surrounded by the first smaller orifice ridge 1221 and further separates an enclosed third intermediate valve chamber portion 1252 from the second intermediate valve chamber portion 1254. A generally concentric smallest orifice ridge 1223 is also formed as a circular upward projection from the valve body 1290 surrounded by the second smaller orifice ridge 1222 and further separates an inner valve chamber portion 1259 from the third intermediate valve chamber portion 1252. It should be appreciated the top surface of each orifice ridge 1220, 1221, 1222, 1223 is coplanar with the adjacent other orifice ridges, while the depth of the individual intermediate valve chamber cavities 1252, 1254, 1256, may have varied depths and may even be contoured to encourage flow toward an aperture in the valve body 1290. A gasket sealing region 1264 may be formed in the upper surface of the valve body 1290 to receive the metallic gasket 1465 adjacent the periphery of the outer valve chamber portion 1258.

The exemplary valve 1400 may further comprise a first fluid conduit 1210 (typically an inlet) and a second fluid conduit 1214 (typically an outlet), both which conduits communicate fluid to the valve chamber, a valve chamber sealing diaphragm 1470, and a control element moveable by deflection of the valve chamber sealing diaphragm 1470. The moveable control element may be additionally comprised of a control plate 1300 (further described below) that is affixed to a control shaft 1482 that is affixed to the valve chamber sealing diaphragm 1470. In the illustration of FIGS. 14B and 14D a central insert 1350 of the control plate 1300 may be mounted onto a stub 1483 of the control shaft 1482 and thereby suspended within the upper valve chamber portion 1457. Any suitable mounting method may be used such as press fit, swaging the head of the stub, a threaded fastener, welding, or similar design choices according to the desires of a practitioner, so long as the fluid passageways through the various control plate holes are not obscured. It should be appreciated that, rather than the control plate being mounted to the stub 1483 of the control shaft 1482 using a through hole 1352 as shown in FIG. 14B and FIG. 14D, a blind hole mounting may instead be used similar to what is depicted in FIGS. 9A-9D. In the design of the exemplary valve 1400, a first fluid conduit aperture 1212 provides fluid communication between the inner valve chamber portion 1259 and the first fluid conduit 1210. Similarly, a second fluid conduit aperture 1216 shaped as a curved slot provides fluid communication between the first intermediate valve chamber portion 1256 and the second fluid conduit 1214. Also provided is a third inner fluid conduit aperture 1218 shaped as a curved slot which provides fluid communication between the third intermediate valve chamber portion 1252 and the second fluid conduit 1214. In the present illustration of FIGS. 14A-14D, the valve 1400 is completely closed in a shut-off no-flow condition so the control plate 1300 is shown contacting all four orifice ridges: largest 1220, first smaller 1221, second smaller 1222, and smallest 1223. Designers will appreciate the first fluid conduit 1210 and second fluid conduit 1214 may provide fluid passage to a surface mount component interface rather than the tube stubs illustrated. The K1S and W-Seal are surface mount component interface examples well known in semiconductor capital equipment design and therefore not illustrated in the drawings of this disclosure. The parts comprising said valve may be constructed from materials chosen for desired chemical inertness relative to the fluids to be handled and may include, for example, stainless steels, Monel^{®} metals, titanium alloys, Hastelloy^{®} alloys, Elgiloy^{®}, brass, or polymers such as Teflon^{®}, Kel-F^{®}, Vespel^{®}, Kynar^{®}, and combinations of metals and polymers either separate or together. For example, a type 316L stainless steel valve body 1290 may be used with a Hastelloy^{®} nickel alloy control plate 1300 and an Elgiloy^{®} cobalt alloy sealing diaphragm 1470. Alternatively, the valve body, sealing diaphragm, and control plate body, may all be made from the same stainless steel alloy.

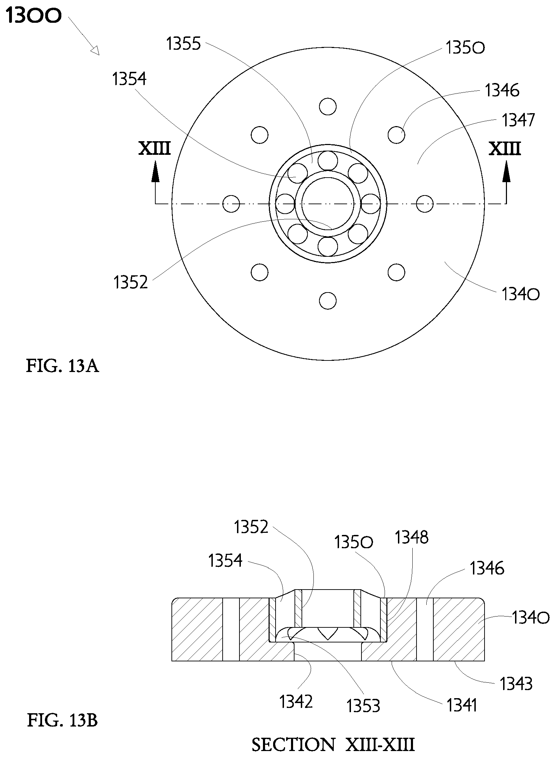

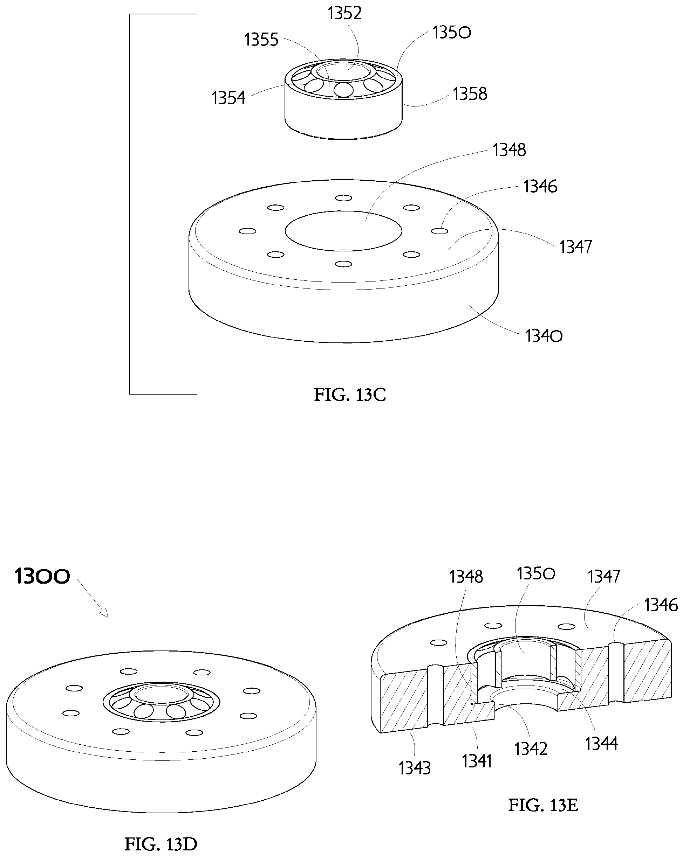

An example of a flow-through control plate 1300 as claimed, illustrated in FIGS. 13A-13E may be comprised of two pieces pressed together: a control plate body 1340 formed as a basically circular disk having one or more features on the opposed sides of the disk, and a central insert 1350. The features of the control plate body 1340 may include a centered insert mounting hole 1348, said mounting hole effectively being defined as a counterbore 1344 that terminates in a lesser diameter control plate through hole 1342, and one or more middle thru-holes 1346. The axisymmetric central insert 1350 includes a central thru-hole 1352 and an outer rim 1358. The region between the central thru-hole 1352 and the outer rim 1358 is pierced through by one or more insert holes 1354 which are generally parallel to the central thru-hole 1352. Leaving webs of material 1355 of the central insert between the insert holes 1354 assures the outside diameter is robust enough to allow the central insert 1350 to be locked into the insert mounting hole 1348 by a simple press fit (see exploded view FIG. 13C and sectioned view FIG. 13B). Other assembly methods such as welding or brazing (in the case of metallic parts) may be contemplated, and the insert holes 1354 might be curved slots rather than round, but the illustrated design is likely least expensive to machine. The central insert 1350 can be made by injection molding, or die casting as appropriate, but such methods may not meet the density and cleanliness requirements of high purity fluid delivery apparatus as typically used in semiconductor capital equipment. The insert holes 1354 in conjunction with the control plate through hole 1342 constitute fluid passageways through which fluid may pass from one side of the control plate body 1340 to the opposite side without need to transit around the outside diameter periphery. A concave insert bottom relief (or concave bottom relief) 1353 may guide flow from the insert thru-holes 1354 toward the control plate through hole 1342. More particularly, the insert holes 1354 fluidly connect the inner valve chamber portion 1259 with the upper valve chamber portion 1457 (further explained below with respect to FIG. 14B).

An alternative design (not illustrated) for the central insert 1350 might comprise an insert shaft and an insert flange projecting radially outward. The insert flange would be pierced through by one or more flange holes generally parallel to the insert shaft. Again, leaving webs of material between the flange holes would assure the outside diameter of the insert flange would be robust enough to allow the alternative central insert to be locked into the insert mounting hole 1348 by a simple press fit. An undesirable lack of robustness has been observed when connecting such an insert shaft to a valve topworks diaphragm so this alternative design is not considered further in this disclosure with respect to any of the control plate types described herein and following below.

The diameter of the control plate through hole 1342 is chosen so as to create a continuous uninterrupted first surface region 1341, on the lower flat side of the disk shaped control plate body 1340, such that the first surface region 1341 has radial extent sufficient to span between contacting the second smaller orifice ridge 1222 and the smallest orifice ridge 1223 while covering the entire third intermediate valve chamber portion 1252. The one or more middle thru- holes 1346 pierce the control plate body 1340 and typically are uniformly spaced around a constant diameter circle further surrounding the first surface region 1341. **In** some embodiments, the middle thru-holes 1346 extend substantially straight through the control plate body 1340. The diameter of the constant diameter circle, and diameter of the middle thru-holes 1346, are chosen so those middle thru-holes 1346 only cover the second intermediate valve chamber portion 1254 and do not overlap the adjacent first smaller orifice ridge 1221 nor the second smaller orifice ridge 1222. The middle thru-holes 1346 constitute fluid passageways through which fluid may pass from one side of the control plate body 1340 to the opposite side without need to transit around the outside diameter periphery. More particularly, the middle thru-holes 1346 fluidly connect the second intermediate valve chamber portion 1254 with the upper valve chamber portion 1457. Webs of material 1347 between the one or more adjacent middle thru- holes 1346 provide mechanical connection from the first surface region 1341 to a continuous uninterrupted second surface region 1343, on the lower flat side of the disk shaped body 1340, that second surface region 1343 having radial extent sufficient to span between contacting the largest orifice ridge 1220 and first smaller orifice ridge 1221 while covering the entire first intermediate valve chamber portion 1256.

The manner of the exemplary valve 1400 controlling fluid flow may be further understood by considering the inner valve chamber portion 1259 surrounded by the smallest orifice ridge 1223, being fed by the first fluid conduit aperture 1212 in fluid communication with the first fluid conduit 1210, whereby at least a portion of the control plate 1300 may be moved toward or away from the smallest orifice ridge 1223 to create a first control gap (not shown) through which a first fluid portion may controllably flow. The controllable first fluid portion may transit directly into the third intermediate valve chamber portion 1252 from whence it may exit through the third inner fluid conduit aperture 1218 in fluid communication with the second fluid conduit 1214. A second fluid portion may transit from the inner valve chamber portion 1259 upward via the control plate through hole 1342 and the insert holes 1354 into the upper portion 1457 of the valve chamber, and therefrom transit downward through the middle thru-holes 1346 into the second intermediate valve chamber portion 1254. Moving at least a portion of the control plate 1300 toward or away from the second smaller orifice ridge 1222 will create a second control gap (not shown) through which the second fluid portion may also controllably flow directly into the third intermediate valve chamber portion 1252 from the second intermediate valve chamber portion 1254 and then exit through the third inner fluid conduit aperture 1218 in fluid communication with the second fluid conduit 1214. In the present example valve 1400, an actuator (not shown) may apply a force to the control shaft 1482 to deflect the diaphragm 1470, which will move the affixed control plate 1300, and thereby modulate the conductance through the valve 1400 by changing the first control gap and the second control gap.

Simultaneous with the preceding described flow of the first fluid portion and second fluid portion, moving at least a portion of the control plate 1300 toward or away from the largest orifice ridge 1220 similarly creates a third control gap (not shown) through which a third fluid portion may controllably flow. The controllable third fluid portion may transit from the inner valve chamber portion 1259 upward through the one or more insert holes 1354 of the control plate 1300 and sweep through the upper valve chamber portion 1457 into the outer valve chamber portion 1258 from whence the third fluid portion may exit through the third control gap into the first intermediate valve chamber portion 1256. Upon reaching the first intermediate valve chamber portion 1256 the controllable third fluid portion may exit through the second fluid conduit aperture 1216 in fluid communication with the second fluid conduit 1214. A fourth fluid portion may transit from the inner valve chamber portion 1259 upward through the one or more insert holes 1354 into the upper valve chamber portion 1457, and therefrom transit downward through the one or more middle thru-holes 1346 into the second intermediate valve chamber portion 1254. Moving at least a portion of the control plate 1300 toward or away from the first smaller orifice ridge 1221 will create a fourth control gap (not shown) through which the fourth fluid portion may also controllably flow directly into the first intermediate valve chamber portion 1256 from whence it may exit through the second inner fluid conduit aperture 1216 in fluid communication with the second fluid conduit 1214. Thus in the present example valve 1400, the actuator (not shown) applying a force to the control shaft 1482 and deflecting the diaphragm 1470 thereby additionally modulates the conductance through the valve 1400 by changing the third control gap and the fourth control gap. It should be appreciated that while the valve 1400 is closed, fluid may pass through the holes in the control plate 1300 and into the upper portion 1457 of the valve chamber, the outer valve chamber portion 1258 and the second intermediate valve chamber portion 1254, but cannot go further. Thus, when the valve 1400 is closed, fluid cannot pass from the first fluid conduit 1210 to the second fluid conduit 1214.

Designers may appreciate the largest 1220 and first smaller 1221 orifice ridges need merely be nested rather than exactly concentric; moreover, the nested pair of orifice ridges 1220,1221 may be placed asymmetrically with respect to the shape and dimensions of the lower valve chamber. The flow-through control plate 1300 of course primarily needs to have a continuous uninterrupted second surface region 1343, on the lower flat side of the disk shaped body 1340, sufficient to span between contacting the largest 1220 and first smaller 1221 orifice ridges and cover the entire first intermediate valve chamber portion 1256. In similar fashion the second smaller 1222 and smallest 1223 orifice ridges need merely be nested rather than exactly concentric; moreover, the nested pair of orifice ridges 1222,1223 may be placed asymmetrically with respect to the shape and dimensions of the lower valve chamber. The flow-through control plate 1300 of course primarily needs to have a continuous uninterrupted first surface region 1341, on the lower flat side of the disk shaped body 1340, sufficient to span between contacting the second smaller 1222 and smallest 1223 orifice ridges and cover the entire third intermediate valve chamber portion 1252. Designers will also appreciate the described directions of fluid flow, progressing from the first fluid conduit 1210 to the second fluid conduit 1214, are used for convenience and clarity but are not limiting. Fluid may flow in an opposite direction, from the second fluid conduit 1214 to the first fluid conduit 1210, and the complete valve chamber will still be beneficially swept by the controllable fluid flow. The valve design illustrated in FIGS. 14A-14D substantially eliminates any concerns about internal dead space versus swept volumes and may also improve dynamic response of the exemplary valve design. The flow-through control plate enables the use of nested orifice ridges 1220,1221,1222,1223 that together create total control gap length about triple the circumference of a single large orifice while substantially reducing the area which must be closed to achieve shut-off. This combination provides high- conductance with low closing force.

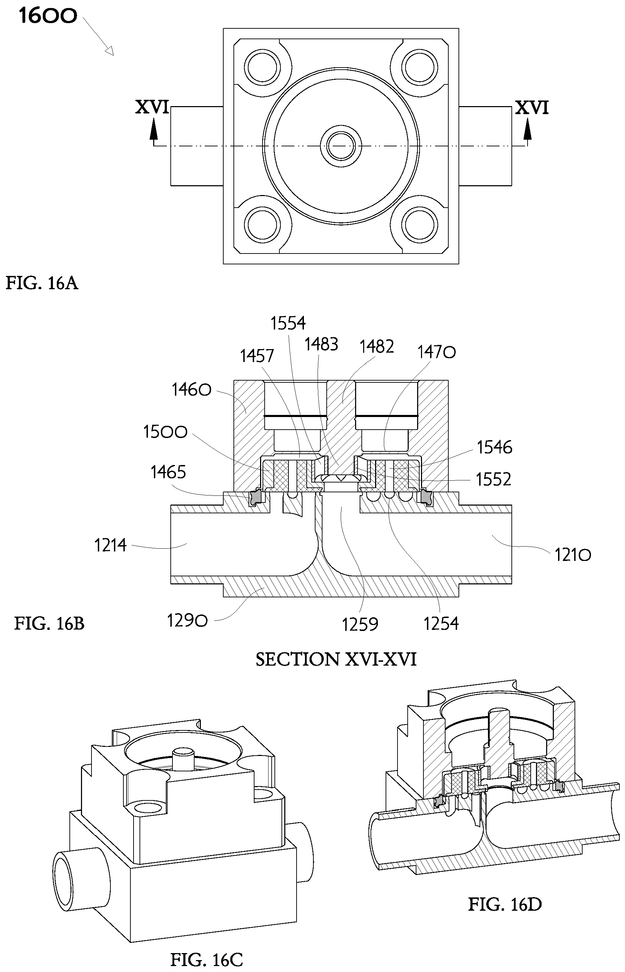

Another exemplary high conductance valve 1600 is illustrated in FIGS. 16A-16D. Similar to the previously described valve 1400, this valve uses the high conductance valve body 1290 having two nested groups of centered concentric orifice ridges and a valve topworks including a valve housing 1460 removably joined to the valve body 1290, by deforming a metallic gasket 1465, a valve chamber sealing diaphragm 1470, and a control element moveable by deflection of the valve chamber sealing diaphragm 1470. The moveable control element may be additionally comprised of another control plate 1500 (further described below) that is affixed to a control shaft 1482 that is affixed to the diaphragm 1470. In the illustration of FIGS. 16B and 16D a central insert 1550 of the control plate 1500 may be mounted onto a stub 1483 of the control shaft 1482 and thereby suspended within the upper valve chamber portion 1457. Any suitable mounting method may be used such as press fit, swaging the head of the stub, a threaded fastener, welding, or similar design choices according to the desires of a practitioner, so long as the fluid passageways through the various control plate holes are not obscured. It should be appreciated that, rather than the control plate being mounted to the stub 1483 of the control shaft 1482 using a through hole 1552 as shown in FIG. 16B and FIG. 16D, a blind hole mounting may instead be used similar to what is depicted in FIGS. 9A-9D. In the design of the exemplary valve 1600, a first fluid conduit aperture 1212 provides fluid communication between the inner valve chamber portion 1259 and the first fluid conduit 1210. Similarly, a second fluid conduit aperture 1216 shaped as a curved slot provides fluid communication between the first intermediate valve chamber portion 1256 and the second fluid conduit 1214. Also provided is a third inner fluid conduit aperture 1218 shaped as a curved slot which provides fluid communication between the third intermediate valve chamber portion 1252 and the second fluid conduit 1214. In the present illustration of FIGS. 16A-16D, the valve 1600 is completely closed in a shut-off no-flow condition so the control plate 1500 is shown contacting all four orifice ridges: largest 1220, first smaller 1221, second smaller 1222, and smallest 1223. Designers will appreciate the first fluid conduit 1210 and second fluid conduit 1214 may provide fluid passage to a surface mount component interface rather than the tube stubs illustrated. The K1S and W-Seal are surface mount component interface examples well known in semiconductor capital equipment design and therefore not illustrated in the drawings of this disclosure. The parts comprising said valve may be constructed from materials chosen for desired chemical inertness relative to the fluids to be handled and may include, for example, stainless steels, Monel^{®} metals, titanium alloys, Hastelloy^{®} alloys, Elgiloy^{®}, brass, or polymers such as Teflon^{®}, Kel-F^{®}, Vespel^{®}, Kynar^{®}, and combinations of metals and polymers either separate or together. For example, a type 316L stainless steel valve body 1290 may be used with a Hastelloy^{®} nickel alloy control plate 1500 and an Elgiloy^{®} cobalt alloy sealing diaphragm 1470. Alternatively, the valve body, sealing diaphragm, and control plate body, may all be made from the same stainless steel alloy.

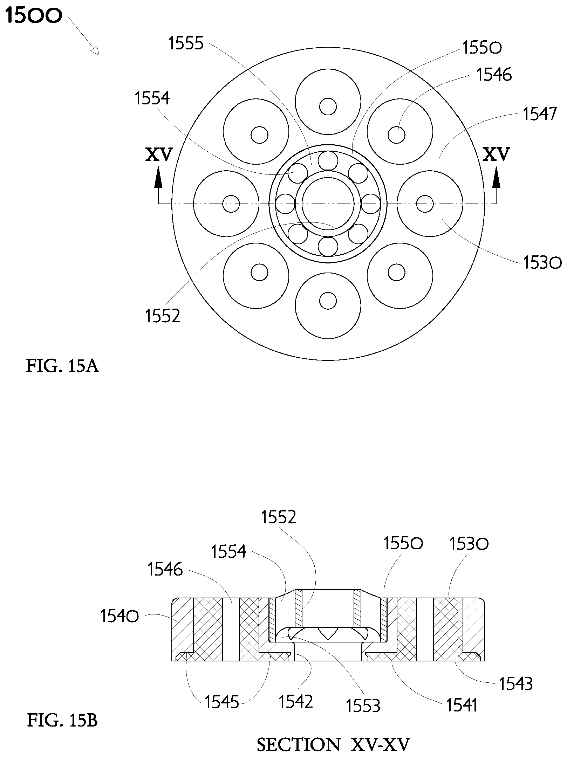

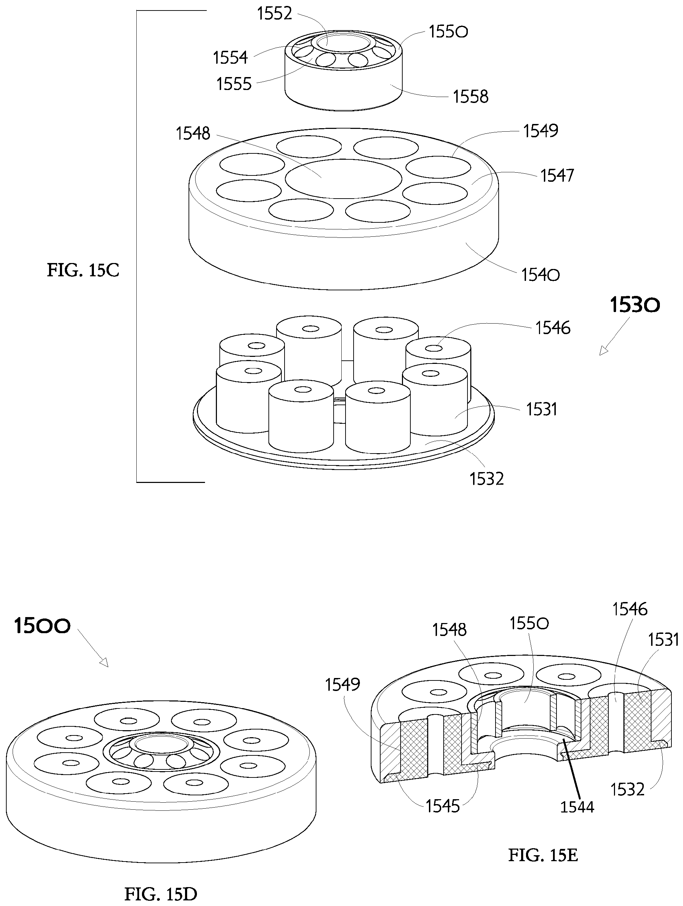

An example of a flow-through control plate 1500 as claimed, illustrated in FIGS. 15A-15E may be comprised of three elements assembled by a combination of processes: a control plate body 1540 formed as a basically circular disk, with a polymeric insert (seat insert) 1530, together having one or more features on the opposed sides of the disk, and a central insert 1550. The features of the control plate body 1540 may include a centered insert mounting hole 1548, said mounting hole effectively being defined as a counterbore 1544 that terminates in a lesser diameter control plate through hole 1542, and one or more middle through cavities 1549. The axisymmetric central insert 1550 includes a central thru-hole 1552 and an outer rim 1558. The region between the central thru-hole 1552 and the outer rim 1558 is pierced through by one or more insert holes 1554 which are generally parallel to the central thru-hole 1552. Leaving webs of material 1555 between the insert holes 1554 assures the outside diameter of the outer rim 1558 is robust enough to allow the central insert 1550 to be locked into the insert mounting hole 1548 by a simple press fit (see exploded view FIG. 15C and sectioned view FIG. 15B). Other assembly methods such as welding or brazing (in the case of metallic parts) may be contemplated, and the insert holes 1554 might be curved slots rather than round, but the illustrated design is likely least expensive to machine. The central insert 1550 can be made by injection molding, or die casting as appropriate, but such methods may not meet the density and cleanliness requirements of high purity fluid delivery apparatus as typically used in semiconductor capital equipment. The insert holes 1554 in conjunction with the control plate through hole 1542 constitute fluid passageways through which fluid may pass from one side of the control plate body 1540 to the opposite side without need to transit around the outside diameter periphery. A concave insert bottom relief (or concave bottom relief) 1553 may guide flow from the insert thru-holes 1554 toward the control plate through hole 1542. More particularly, the insert holes 1554 fluidly connect the inner valve chamber portion 1259 with the upper valve chamber portion 1457 (further explained below with respect to FIG. 16B). As previously noted, an alternative design (not illustrated) for the central insert 1550 might comprise an insert shaft and an insert flange projecting radially outward. The insert flange would be pierced through by one or more flange holes generally parallel to the insert shaft. An undesirable lack of robustness has been observed when connecting such an insert shaft to a valve topworks diaphragm and therefore is not further discussed herein.

The representative polymeric insert 1530 illustrated in FIGS. 15B, 15C and 15E, may have specific features formed as a consequence of being compression molded into openings within the control plate body 1540. For example, the insert may include a plurality of pillars that are each received into one of a plurality of openings in the control plate body due to a molding process. A typical compression molding process starts with polychlorotrifluoroethene (PCTFE) powder filling the control plate body 1540 openings 1545,1549 and then polymerizes the powder under the effect of heat and pressure applied directly into the control plate body 1540 by known methods. The exemplary polymer insert 1530 has a plurality of polymer pillars 1531 formed into and mating the plurality of middle through cavities 1549 while also being interconnected by a contiguous relatively thin polymer disc 1532 which fills a wide shallow circular groove 1545 formed in the control plate body 1540 (facing toward the orifice ridges as further explained with respect to FIG. 16B below). Middle thru-holes 1546 pierce the polymer pillars 1531 and constitute fluid passageways through which fluid may pass from one side of the control plate body 1540 to the opposite side without need to transit around the outside diameter periphery. Inside diameter of the thin polymer disc 1532 which fills a wide shallow circular groove 1545 (slightly larger than diameter of the control plate through hole 1542) is chosen so as to create a continuous uninterrupted first surface region 1541, on the lower flat side of the disk shaped control plate body 1540, such that the first surface region 1541 has radial extent sufficient to span between contacting the second smaller orifice ridge 1222 and the smallest orifice ridge 1223 while covering the entire third intermediate valve chamber portion 1252. The one or more middle thru-holes 1546 pierce the one or more polymer pillars 1531, which fill the one or more middle through cavities 1549 formed in the control plate body 1540, and typically are uniformly spaced around a constant diameter circle further surrounding the first surface region 1541. In some embodiments, the middle thru-holes 1546 extend substantially straight through the one or more polymer pillars 1531 and thin polymer disc 1532. The diameter of the constant diameter circle and diameter of the middle thru-holes 1546 are chosen so those thru-holes only cover the second intermediate valve chamber portion 1254 and do not overlap the adjacent first smaller orifice ridge 1221 nor the second smaller orifice ridge 1222. More particularly, the middle thru-holes 1546 fluidly connect the intermediate valve chamber portion 1254 with the upper valve chamber portion 1457. Webs of material 1547 between the one or more adjacent middle through cavities 1549 provide additional mechanical support for the polymer disc 1532 that spans from the first surface region 1541 to a continuous uninterrupted second surface region 1543, on the lower flat side of the disk shaped body 1540, that second surface region 1543 having radial extent sufficient to span between contacting the largest orifice ridge 1220 and first smaller orifice ridge 1221 while covering the entire first intermediate valve chamber portion 1256.

The manner of the exemplary valve 1600 controlling fluid flow may be further understood by considering the inner valve chamber portion 1259 surrounded by the smallest orifice ridge 1223, being fed by the first fluid conduit aperture 1212 in fluid communication with the first fluid conduit 1210, whereby at least a portion of the control plate 1500 may be moved toward or away from the smallest orifice ridge 1223 to create a first control gap (not shown) through which a first fluid portion may controllably flow. The controllable first fluid portion may transit directly into the third intermediate valve chamber portion 1252 from whence it may exit through the third inner fluid conduit aperture 1218 in fluid communication with the second fluid conduit 1214. A second fluid portion may transit from the inner valve chamber portion 1259 upward via the control plate through hole 1542 and the insert holes 1554 into the upper portion 1457 of the valve chamber, and therefrom transit downward through the middle thru- holes 1546 into the second intermediate valve chamber portion 1254. Moving at least a portion of the control plate 1500 toward or away from the second smaller orifice ridge 1222 will create a second control gap (not shown) through which the second fluid portion may also controllably flow directly into the third intermediate valve chamber portion 1252 from the second intermediate valve chamber portion 1254 and then exit through the third inner fluid conduit aperture 1218 in fluid communication with the second fluid conduit 1214. In the present example valve 1600, an actuator (not shown) may apply a force to the control shaft 1482 to deflect the diaphragm 1470, which will move the affixed control plate 1500, and thereby modulate the conductance through the valve 1600 by changing the first control gap and the second control gap.

Simultaneous with the preceding described flow of the first fluid portion and second fluid portion, moving at least a portion of the control plate 1500 toward or away from the largest orifice ridge 1220 similarly creates a third control gap (not shown) through which a third fluid portion may controllably flow. The controllable third fluid portion may transit from the inner valve chamber portion 1259 upward through the one or more insert holes 1554 of the control plate 1500 and sweep through the upper valve chamber portion 1457 into the outer valve chamber portion 1258 from whence the third fluid portion may exit through the third control gap into the first intermediate valve chamber portion 1256. Upon reaching the first intermediate valve chamber portion 1256 the controllable third fluid portion may exit through the second fluid conduit aperture 1216 in fluid communication with the second fluid conduit 1214. A fourth fluid portion may transit from the inner valve chamber portion 1259 upward through the one or more insert holes 1554 into the upper valve chamber portion 1457, and therefrom transit downward through the one or more middle thru-holes 1546 into the second intermediate valve chamber portion 1254. Moving at least a portion of the control plate 1500 toward or away from the first smaller orifice ridge 1221 will create a fourth control gap (not shown) through which the fourth fluid portion may also controllably flow directly into the first intermediate valve chamber portion 1256 from whence it may exit through the second inner fluid conduit aperture 1216 in fluid communication with the second fluid conduit 1214. Thus in the present example valve 1600, the actuator (not shown) applying a force to the control shaft 1482 and deflecting the diaphragm 1470 thereby additionally modulates the conductance through the valve 1600 by changing the third control gap and the fourth control gap. It should be appreciated that while the valve 1600 is closed, fluid may pass through the holes in the control plate 1500 and into the upper portion 1457 of the valve chamber, the outer valve chamber portion 1258 and the second intermediate valve chamber portion 1254, but cannot go further. Thus, when the valve 1600 is closed, fluid cannot pass from the first fluid conduit 1210 to the second fluid conduit 1214.

Designers may appreciate the largest 1220 and first smaller 1221 orifice ridges need merely be nested rather than exactly concentric; moreover, the nested pair of orifice ridges 1220,1221 may be placed asymmetrically with respect to the shape and dimensions of the lower valve chamber. The flow-through control plate 1500 of course primarily needs to have a continuous uninterrupted second surface region 1543, on the lower flat side of the disk shaped body 1540, sufficient to span between contacting the largest 1220 and first smaller 1221 orifice ridges and cover the entire first intermediate valve chamber portion 1256. In similar fashion the second smaller 1222 and smallest 1223 orifice ridges need merely be nested rather than exactly concentric; moreover, the nested pair of orifice ridges 1222,1223 may be placed asymmetrically with respect to the shape and dimensions of the lower valve chamber. The flow-through control plate 1500 of course primarily needs to have a continuous uninterrupted first surface region 1541, on the lower flat side of the disk shaped body 1540, sufficient to span between contacting the second smaller 1222 and smallest 1223 orifice ridges and cover the entire third intermediate valve chamber portion 1252. Designers will also appreciate the described directions of fluid flow, progressing from the first fluid conduit 1210 to the second fluid conduit 1214, are used for convenience and clarity but are not limiting. Fluid may flow in an opposite direction, from the second fluid conduit 1214 to the first fluid conduit 1210, and the complete valve chamber will still be beneficially swept by the controllable fluid flow. The valve design illustrated in FIGS. 16A-16D substantially eliminates any concerns about internal dead space versus swept volumes and may also improve dynamic response of the exemplary valve design. The flow-through control plate enables the use of nested orifice ridges 1220,1221,1222,1223 that together create total control gap length about triple the circumference of a single large orifice while substantially reducing the area which must be closed to achieve shut-off. This combination provides high- conductance with low closing force and the inclusion of the relatively soft polymer insert 1530 will further improve shut-off tightness of the valve 1600.

The invention is defined by the appended claims.

## Claims

1. A control plate (1300;1500) for a high-conductance valve comprising:
a control plate body (1340;1540) formed as a basically circular disk having a flat side and an opposed side opposite the flat side, the control plate (1300;1500) configured to be moved within a valve by an actuator, the flat side having a continuous uninterrupted flat portion to shut-off fluid flow in the valve; and
a centered mounting hole (1348;1548) defined as a counterbore (1344;1544) in the control plate body (1340;1540), the centered mounting hole (1348;1548) terminating in a control plate through hole (1342;1542) defined in the control plate body (1340;1540), the control plate through hole (1342;1542) having a diameter that is less than a diameter of the centered mounting hole (1348;1548),
**characterised in that** the control plate (1300;1500) further comprises a central insert (1350;1550) received in the mounting hole (1348;1548), and at least one insert hole (1354;1554) defined in the central insert (1340;1550), each insert hole (1354;1554) in conjunction with the control plate through hole (1342;1542) forming a fluid path for fluid to pass from the flat side through to the opposed side.

2. The control plate (1300;1500) of claim 1, wherein the at least one insert hole (1354;1554) includes a plurality of insert holes (1354;1554) defined in the central insert (1350;1550).

3. The control plate (1300;1500) of claim 2, wherein the plurality of insert holes (1354;1554) are disposed about a center of the central insert (1350;1550) so that a web of material (1355;1555) of the central insert (1350;1550) surrounds each of the plurality of insert holes (1354;1554).

4. The control plate (1300;1500) of claim 3, further comprising a central thru-hole (1352;1552) extending through the center of the central insert (1350;1550), the central thru-hole (1352;1552) being constructed to mount the central insert (1350;1550) and the control plate body (1340;1540) onto a control shaft.

5. The control plate (1300;1500) of claim 2, wherein the control plate (1300;1500) includes a plurality of fluid passageways disposed about a radially outer portion of the control plate body (1340;1540) and extending substantially straight through the control plate body (1340;1540).

6. The control plate (1300;1500) of claim 5, wherein the flat side includes a first continuous uninterrupted flat portion disposed between the control plate through hole (1342;1542) and the plurality of fluid passageways and a second continuous uninterrupted flat portion disposed radially outward of the plurality of fluid passageways.

7. The control plate (1300;1500) of claim 5, wherein a seat insert (1530) is received in the control plate body (1340;1540), and the plurality of fluid passageways being defined in the seat insert (1530).

8. The control plate (1300;1500) of claim 7, wherein the seat insert (1530) includes a disc that fills a circular groove formed in the control plate body (1340;1540), the seat insert including a first continuous uninterrupted flat portion disposed radially inward of the plurality of fluid passageways and a second continuous uninterrupted flat portion disposed radially outward of the plurality of fluid passageways.

9. The control plate (1300;1500) of claim 8, wherein the seat insert further (1530) includes a plurality of pillars (1531) that are each received in one of a plurality of openings in the control plate body (1340;1540), each pillar (1531) extending from the disc, each of the fluid passageways extending through the pillars (1531) and the disc.

10. The control plate (1300;1500) of claim 7, wherein the seat insert (1530) is formed from a polymer material, and the control plate body (1340;1540) is formed from a metallic material.

11. The control plate (1300;1500) of claim 1, wherein the central insert (1350;1550) includes a concave bottom relief (1353;1553) for guiding fluid from each insert hole (1354;1554) to the control plate through hole (1342;1542).

12. The control plate (1300;1500) of claim 1, wherein the central insert (1350;1550) is axisymmetric.

13. The control plate (1300;1500) of claim 1, wherein the central insert (1350;1550) is secured in the mounting hole (1348;1548) by one of a press fit, welding, and brazing.

14. A valve assembly (1400;1600) comprising:
a valve body (1290) having a valve chamber, at least one first fluid conduit aperture (1212) in fluid communication with the valve chamber, at least one second fluid conduit aperture (1216) in fluid communication with the valve chamber, and at least one pair of adjacent orifice ridge segments, the at least one pair of adjacent orifice ridge segments extending from the valve body (1290) into the valve chamber and defining an intermediate valve chamber region (1254) between the at least one pair of adjacent orifice ridge segments; and the control plate (1300;1500) of any preceding claim.

15. The valve assembly (1400;1600) of claim 14, wherein the at least one pair of adjacent orifice ridge segments includes two adjacent orifice ridge segments that are substantially circular in shape and further define an outer valve chamber portion (1258) disposed outside the two adjacent orifice ridge segments and an inner valve chamber portion (1259) disposed inside the two adjacent orifice ridge segments.

16. The valve assembly (1400;1600) of claim 15, further comprising a first fluid conduit (1210) in fluid communication with the at least one first fluid conduit aperture (1212) and a second fluid conduit (1214) in fluid communication with the at least one second fluid conduit aperture (1216), wherein when the control plate body (1340;1540) is in the closed position, the at least one first fluid conduit aperture (1212) is in fluid communication with the inner valve chamber portion (1259), the at least one second fluid conduit aperture (1216) is in fluid communication with the intermediate valve chamber portion (1254), and the surface region of the first side of the control plate body (1340;1540) sealingly contacts the two adjacent orifice ridge segments to prevent fluid flow from flowing between the at least one first fluid conduit aperture (1212) and the at least one second fluid conduit aperture (1216).

17. The valve assembly (1400;1600) of claim 16, wherein when the control plate body (1340;1540) is in the closed position, the at least one insert hole (1354;1554) and the control plate through hole (1342;1542) provide fluid communication between the inner valve chamber portion (1259) and the outer valve chamber portion (1258).

18. The valve assembly (1400;1600) of claim 15, further comprising a first fluid conduit (1210) in fluid communication with the at least one first fluid conduit aperture (1212) and a second fluid conduit (1214) in fluid communication with the at least one second fluid conduit aperture (1216), wherein when the control plate body (1340;1540) is in the closed position, the at least one first fluid conduit aperture (1212) is in fluid communication with the outer valve chamber portion (1258), the at least one second fluid conduit aperture (1216) is in fluid communication with the intermediate valve chamber portion (1254), and the surface region of the first side of the control plate body (1340;1540) sealingly contacts the two adjacent orifice ridge segments to prevent fluid from flowing between the at least one first fluid conduit aperture (1212) and the at least one second fluid conduit aperture (1216).

19. The valve assembly (1400;1600) of claim 18, wherein when the control plate body (1340;1540) is in the closed position, the at least one insert hole (1354;1554) and the control plate through hole (1342;1542) provide fluid communication between the outer valve chamber portion (1258) and the inner valve chamber portion (1259).

20. The valve assembly (1400;1600) of claim 14, wherein the at least one pair of adjacent orifice ridge segments includes four adjacent orifice ridge segments that are substantially circular in shape, the four adjacent orifice ridge segments including a largest orifice ridge segment (1220), a first smaller orifice ridge segment (1221) surrounded by the largest orifice ridge segment (1220), a second smaller orifice ridge segment (1222) surrounded by the first smaller orifice ridge segment (1221), and a smallest orifice ridge segment (1223) surrounded by the second smaller orifice ridge segment (1222), the four adjacent orifice ridge segments defining an outer valve chamber portion (1258) disposed outside the four adjacent orifice ridge segments, an inner valve chamber portion (1259) disposed inside the four adjacent orifice ridge segments, a first intermediate valve chamber portion (1256) disposed between the largest orifice ridge segment (1220) and the first smaller orifice ridge segment (1221), a second intermediate valve chamber portion (1254) disposed between the first smaller orifice ridge segment (1221) and the second smaller orifice ridge segment (1222), and a third intermediate valve chamber portion (1252) disposed between the second smaller orifice ridge segment (1222) and the smallest orifice ridge segment (1223).

21. The valve assembly (1400;1600) of claim 20, further comprising a first fluid conduit (1210) in fluid communication with the at least one first fluid conduit aperture (1212) and a second fluid conduit (1214) in fluid communication with the at least one second fluid conduit aperture (1216), wherein when the control plate body (1340;1540) is in the closed position, the at least one first fluid conduit aperture (1212) is in fluid communication with the inner valve chamber portion (1259), the at least one second fluid conduit aperture (1216) is in fluid communication with the first intermediate valve chamber portion (1256) and a first continuous uninterrupted flat portion of the surface region of the first side of the control plate body (1340;1540) sealingly contacts the largest orifice ridge segment (1220) and the first smaller orifice ridge segment (1221) to prevent fluid from flowing between the at least one first fluid conduit aperture (1212) and the at least one second fluid conduit aperture (1216).

22. The valve assembly (1400;1600) of claim 21, wherein the valve body (1290) further includes at least one third fluid conduit aperture in fluid communication with the second fluid conduit (1214), and wherein when the control plate body (1340;1540) is in the closed position, the at least one third fluid conduit aperture is in fluid communication with the third intermediate valve chamber portion (1522) and a second continuous uninterrupted flat portion of the surface region of the first side of the control plate body (1340;1540) sealingly contacts the second smaller orifice ridge segment (1222) and the smallest orifice ridge segment (1223) to prevent fluid from flowing between the at least one first fluid conduit aperture (1212) and the at least one third fluid conduit aperture.

23. The valve assembly (1400;1600) of claim 22, wherein the control plate (1300;1500) includes a plurality of fluid passageways disposed about a radially outer portion of the control plate body (1340;1540) and extending substantially straight through the control plate body (1340;1540).

24. The valve assembly (1400;1600) of claim 23, wherein the first continuous uninterrupted flat portion of the surface region of the first side of the control plate body (1340;1540) is disposed between the control plate through hole (1342;1542) and the plurality of fluid passageways and the second continuous uninterrupted flat portion of the surface region is disposed radially outward of the plurality of fluid passageways.

25. The valve assembly (1400;1600) of claim 24, wherein when the control plate body (1340;1540) is in the closed position, the at least one insert hole (1354;1554) and the control plate through hole (1342;1542) provide fluid communication between the inner valve chamber portion (1259) and the outer valve chamber portion (1258), and the at least one insert hole (1354;1554), the control plate through hole (1342;1542), and the plurality of fluid passageways provide fluid communication between the inner valve chamber portion (1259), the outer valve chamber portion (1258), and the second intermediate valve chamber portion (1254).

26. The valve assembly (1400;1600) of claim 25, wherein a seat insert (1530) is received in the control plate body (1340;1540), and the plurality of fluid passageways being defined in the seat insert (1530).

27. The valve assembly (1400;1600) of claim 26, wherein the seat insert (1530) includes a disc that fills a circular groove formed in the control plate body (1340;1540).

28. The valve assembly (1400;1600) of claim 26, the seat insert (1530) including a plurality of pillars (1531) that are each received in one of a plurality of openings in the control plate body (1340;1540), each pillar (1531) extending from the first side to the second side, each of the fluid passageways being defined in a respective one of the pillars (1531).

29. The valve assembly (1400;1600) of claim 28, wherein the seat insert (1530) includes a disc that fills a circular groove formed in the control plate body (1340;1540).

30. The valve assembly (1400;1600) of claim 26, wherein the seat insert (1530) is formed from a polymer material, and the control plate body (1340;1540) is formed from a metallic material.

31. The valve assembly (1400;1600) of claim 14, wherein the central insert (1350;1550) includes a concave bottom relief (1353;1553) for guiding fluid from each insert hole (1354;1554) to the control plate through hole (1342;1542).

32. The valve assembly (1400;1600) of claim 14, wherein the central insert (1350;1550) is axisymmetric.

33. The valve assembly (1400;1600) of claim 14, wherein the central insert (1350;1550) is secured in the mounting hole (1348;1548) by one of a press fit, welding, and brazing.

## Patentansprüche

1. Steuerplatte (1300; 1500) für ein Ventil mit hohem Leitwert, aufweisend:
einen Steuerplattenkörper (1340; 1540) der als eine im Wesentlichen kreisförmige Scheibe mit einer flachen Seite und einer gegenüberliegenden Seite gegenüber der flachen Seite ausgebildet ist, wobei die Steuerplatte (1300; 1500) dafür ausgelegt ist, von einem Stellglied innerhalb eines Ventils bewegt zu werden, wobei die flache Seite einen kontinuierlichen ununterbrochenen flachen Abschnitt aufweist, um die Fluidströmung in dem Ventil zu unterbrechen; und
ein zentriertes Befestigungsloch (1348; 1548), das als Senkung (1344; 1544) in dem Steuerplattenkörper (1340; 1540) definiert ist, wobei das zentrierte Befestigungsloch (1348; 1548) in einem in dem Steuerplattenkörper (1340; 1540) definierten Steuerplatten-Durchgangsloch (1342; 1542) endet, wobei das Steuerplatten-Durchgangsloch (1342; 1542) einen Durchmesser aufweist, der kleiner ist als ein Durchmesser des zentrierten Befestigungslochs (1348; 1548),
**dadurch gekennzeichnet, dass** die Steuerplatte (1300; 1500) ferner einen zentralen Einsatz (1350; 1550), der in dem Befestigungsloch (1348; 1548) aufgenommen ist, und mindestens ein Einsatzloch (1354; 1554) aufweist, das in dem zentralen Einsatz (1340; 1550) definiert ist, wobei jedes Einsatzloch (1354; 1554) in Verbindung mit dem Durchgangsloch (1342; 1542) der Steuerplatte einen Fluidpfad für Fluid bildet, um von der flachen Seite durch die gegenüberliegende Seite hindurchzutreten.

2. Steuerplatte (1300; 1500) nach Anspruch 1, wobei das mindestens eine Einsatzloch (1354; 1554) eine Vielzahl von Einsatzlöchern (1354; 1554) aufweist, die in dem zentralen Einsatz (1350; 1550) definiert sind.

3. Steuerplatte (1300; 1500) nach Anspruch 2, wobei die Vielzahl von Einsatzlöchern (1354; 1554) um eine Mitte des zentralen Einsatzes (1350; 1550) angeordnet ist, sodass eine Materialbahn (1355; 1555) des zentralen Einsatzes (1350; 1550) jedes der Vielzahl von Einsatzlöchern (1354; 1554) umgibt.

4. Steuerplatte (1300; 1500) nach Anspruch 3, ferner aufweisend ein zentrales Durchgangsloch (1352; 1552), das sich durch die Mitte des zentralen Einsatzes (1350; 1550) erstreckt, wobei das zentrale Durchgangsloch (1352; 1552) dazu ausgebildet ist, den zentralen Einsatz (1350; 1550) und den Steuerplattenkörper (1340; 1540) an einer Steuerwelle zu montieren.

5. Steuerplatte (1300; 1500) nach Anspruch 2, wobei die Steuerplatte (1300; 1500) eine Vielzahl von Fluiddurchgängen aufweist, die um einen radial äußeren Abschnitt des Steuerplattenkörpers (1340; 1540) herum angeordnet sind und sich im Wesentlichen gerade durch den Steuerplattenkörper (1340; 1540) erstrecken.

6. Steuerplatte (1300; 1500) nach Anspruch 5, wobei die flache Seite einen ersten kontinuierlichen ununterbrochenen flachen Abschnitt, der zwischen dem Steuerplatten-Durchgangsloch (1342; 1542) und der Vielzahl von Fluiddurchgängen angeordnet ist, und einen zweiten kontinuierlichen ununterbrochenen flachen Abschnitt aufweist, der radial außerhalb der Vielzahl von Fluiddurchgängen angeordnet ist.

7. Steuerplatte (1300; 1500) nach Anspruch 5, wobei ein Sitzeinsatz (1530) in dem Steuerplattenkörper (1340; 1540) aufgenommen ist und die Vielzahl von Fluiddurchgängen in dem Sitzeinsatz (1530) definiert ist.

8. Steuerplatte (1300; 1500) nach Anspruch 7, wobei der Sitzeinsatz (1530) eine Scheibe aufweist, die eine kreisförmige Nut füllt, die in dem Steuerplattenkörper (1340; 1540) ausgebildet ist, wobei der Sitzeinsatz einen ersten kontinuierlichen ununterbrochenen flachen Abschnitt aufweist, der radial innerhalb der Vielzahl von Fluiddurchgängen angeordnet ist, und einen zweiten kontinuierlichen ununterbrochenen flachen Abschnitt aufweist, der radial außerhalb der Vielzahl von Fluiddurchgängen angeordnet ist.

9. Steuerplatte (1300; 1500) nach Anspruch 8, wobei der Sitzeinsatz (1530) ferner eine Vielzahl von Säulen (1531) aufweist, die jeweils in einer von einer Vielzahl von Öffnungen in dem Steuerplattenkörper (1340; 1540) aufgenommen sind, wobei sich jede Säule (1531) von der Scheibe erstreckt, wobei sich jeder der Fluiddurchgänge durch die Säulen (1531) und die Scheibe erstreckt.

10. Steuerplatte (1300; 1500) nach Anspruch 7, wobei der Sitzeinsatz (1530) aus einem Polymermaterial gebildet ist und der Steuerplattenkörper (1340; 1540) aus einem metallischen Material gebildet ist.

11. Steuerplatte (1300; 1500) nach Anspruch 1, wobei der zentrale Einsatz (1350; 1550) eine konkave Bodenaussparung (1353; 1553) für ein Leiten von Fluid von jedem Einsatzloch (1354; 1554) zu dem Steuerplatten-Durchgangsloch (1342; 1542) aufweist.

12. Steuerplatte (1300; 1500) nach Anspruch 1, wobei der zentrale Einsatz (1350; 1550) achssymmetrisch ist.

13. Steuerplatte (1300; 1500) nach Anspruch 1, wobei der zentrale Einsatz (1350; 1550) in dem Befestigungsloch (1348; 1548) durch eines von Presssitz, Schweißen und Löten befestigt ist.

14. Ventilanordnung (1400; 1600), aufweisend:
einen Ventilkörper (1290) mit einer Ventilkammer, mindestens einer ersten Fluidleitungsöffnung (1212) in Fluidverbindung mit der Ventilkammer, mindestens einer zweiten Fluidleitungsöffnung (1216) in Fluidverbindung mit der Ventilkammer und mindestens einem Paar benachbarter Öffnungsrippensegmente, wobei sich das mindestens eine Paar benachbarter Öffnungsrippensegmente von dem Ventilkörper (1290) in die Ventilkammer erstreckt und einen Zwischenventilkammerbereich (1254) zwischen dem mindestens einen Paar benachbarter Öffnungsrippensegmente definiert; und die Steuerplatte (1300; 1500) nach einem vorstehenden Anspruch.

15. Ventilanordnung (1400; 1600) nach Anspruch 14, wobei das mindestens eine Paar benachbarter Öffnungsrippensegmente zwei benachbarte Öffnungsrippensegmente aufweist, die im Wesentlichen kreisförmig sind und ferner einen äußeren Ventilkammerabschnitt (1258), der außerhalb der zwei benachbarten Öffnungsrippensegmente angeordnet ist, und einen inneren Ventilkammerabschnitt (1259), der innerhalb der zwei benachbarten Öffnungsrippensegmente angeordnet ist, definieren.

16. Ventilanordnung (1400; 1600) nach Anspruch 15, ferner aufweisend eine erste Fluidleitung (1210) in Fluidverbindung mit der mindestens einen ersten Fluidleitungsöffnung (1212) und eine zweite Fluidleitung (1214) in Fluidverbindung mit der mindestens einen zweiten Fluidleitungsöffnung (1216), wobei, wenn der Steuerplattenkörper (1340; 1540) sich in der geschlossenen Position befindet, die mindestens eine erste Fluidleitungsöffnung (1212) in Fluidverbindung mit dem inneren Ventilkammerabschnitt (1259) steht, die mindestens eine zweite Fluidleitungsöffnung (1216) in Fluidverbindung mit dem Zwischenventilkammerabschnitt (1254) steht und der Flächenbereich der ersten Seite des Steuerplattenkörpers (1340; 1540) dichtend mit den zwei benachbarten Öffnungsrippensegmenten in Kontakt steht, um zu verhindern, dass Fluidströmung zwischen der mindestens einen ersten Fluidleitungsöffnung (1212) und der mindestens einen zweiten Fluidleitungsöffnung (1216) strömt.

17. Ventilanordnung (1400; 1600) nach Anspruch 16, wobei, wenn sich der Steuerplattenkörper (1340; 1540) in der geschlossenen Position befindet, das mindestens eine Einsatzloch (1354; 1554) und das Steuerplatten-Durchgangsloch (1342; 1542) eine Fluidverbindung zwischen dem inneren Ventilkammerabschnitt (1259) und dem äußeren Ventilkammerabschnitt (1258) vorsehen.

18. Ventilanordnung (1400; 1600) nach Anspruch 15, ferner aufweisend eine erste Fluidleitung (1210) in Fluidverbindung mit der mindestens einen ersten Fluidleitungsöffnung (1212) und eine zweite Fluidleitung (1214) in Fluidverbindung mit der mindestens einen zweiten Fluidleitungsöffnung (1216), wobei, wenn sich der Steuerplattenkörper (1340; 1540) in der geschlossenen Position ist, die mindestens eine erste Fluidleitungsöffnung (1212) in Fluidverbindung mit dem äußeren Ventilkammerabschnitt (1258) steht, die mindestens eine zweite Fluidleitungsöffnung (1216) in Fluidverbindung mit dem Zwischenventilkammerabschnitt (1254) steht und der Flächenbereich der ersten Seite des Steuerplattenkörpers (1340; 1540) dichtend mit den zwei benachbarten Öffnungsrippensegmenten in Kontakt steht, um zu verhindern, dass Fluid zwischen der mindestens einen ersten Fluidleitungsöffnung (1212) und der mindestens einen zweiten Fluidleitungsöffnung (1216) strömt.

19. Ventilanordnung (1400; 1600) nach Anspruch 18, wobei, wenn sich der Steuerplattenkörper (1340; 1540) in der geschlossenen Position befindet, das mindestens eine Einsatzloch (1354; 1554) und das Steuerplatten-Durchgangsloch (1342; 1542) eine Fluidverbindung zwischen dem äußeren Ventilkammerabschnitt (1258) und dem inneren Ventilkammerabschnitt (1259) vorsehen.

20. Ventilanordnung (1400; 1600) nach Anspruch 14, wobei das mindestens eine Paar von benachbarten Öffnungsrippensegmenten vier benachbarte Öffnungsrippensegmente aufweist, die im Wesentlichen kreisförmig sind, wobei die vier benachbarten Öffnungsrippensegmente ein größtes Öffnungsrippensegment (1220), ein erstes kleineres Öffnungsrippensegment (1221), das von dem größten Öffnungsrippensegment (1220) umgeben ist, ein zweites kleineres Öffnungsrippensegment (1222), das von dem ersten kleineren Öffnungsrippensegment (1221) umgeben ist, und ein kleinstes Öffnungsrippensegment (1223), das von dem zweiten kleineren Öffnungsrippensegment (1222) umgeben ist, aufweisen, wobei die vier benachbarten Öffnungsrippensegmente einen äußeren Ventilkammerabschnitt (1258), der außerhalb der vier benachbarten Öffnungsrippensegmente angeordnet ist, einen inneren Ventilkammerabschnitt (1259), der innerhalb der vier benachbarten Öffnungsrippensegmente angeordnet ist, einen ersten Zwischenventilkammerabschnitt (1256), der zwischen dem größten Öffnungsrippensegment (1220) und dem ersten kleineren Öffnungsrippensegment (1221) angeordnet ist, einen zweiten Zwischenventilkammerabschnitt (1254), der zwischen dem ersten kleineren Öffnungsrippensegment (1221) und dem zweiten kleineren Öffnungsrippensegment (1222) angeordnet ist, und einen dritten Zwischenventilkammerabschnitt (1252), der zwischen dem zweiten kleineren Öffnungsrippensegment (1222) und dem kleinsten Öffnungsrippensegment (1223) angeordnet ist, definieren.

21. Ventilanordnung (1400; 1600) nach Anspruch 20, ferner aufweisend eine erste Fluidleitung (1210) in Fluidverbindung mit der mindestens einen ersten Fluidleitungsöffnung (1212) und eine zweite Fluidleitung (1214) in Fluidverbindung mit der mindestens einen zweiten Fluidleitungsöffnung (1216), wobei, wenn sich der Steuerplattenkörper (1340; 1540) in der geschlossenen Position befindet, die mindestens eine erste Fluidleitungsöffnung (1212) in Fluidverbindung mit dem inneren Ventilkammerabschnitt (1259) steht, die mindestens eine zweite Fluidleitungsöffnung (1216) in Fluidverbindung mit dem ersten Zwischenventilkammerabschnitt (1256) und einem ersten kontinuierlichen ununterbrochenen flachen Abschnitt des Flächenbereichs der ersten Seite des Steuerplattenkörpers (1340; 1540) dichtend mit dem größten Öffnungsrippensegment (1220) und dem ersten kleineren Öffnungsrippensegment (1221) in Kontakt steht, um zu verhindern, dass Fluid zwischen der mindestens einen ersten Fluidleitungsöffnung (1212) und der mindestens einen zweiten Fluidleitungsöffnung (1216) strömt.

22. Ventilanordnung (1400; 1600) nach Anspruch 21, wobei der Ventilkörper (1290) ferner mindestens eine dritte Fluidleitungsöffnung in Fluidverbindung mit der zweiten Fluidleitung (1214) aufweist, und wobei, wenn sich der Steuerplattenkörper (1340; 1540) in der geschlossenen Position befindet, die mindestens eine dritte Fluidleitungsöffnung in Fluidverbindung mit dem dritten Zwischenventilkammerabschnitt (1522) und einem zweiten kontinuierlichen ununterbrochenen flachen Abschnitt des Flächenbereichs der ersten Seite des Steuerplattenkörpers (1340; 1540) dichtend mit dem zweiten kleineren Öffnungsrippensegment (1222) und dem kleinsten Öffnungsrippensegment (1223) in Kontakt steht, um zu verhindern, dass Fluid zwischen der mindestens einen ersten Fluidleitungsöffnung (1212) und der mindestens einen dritten Fluidleitungsöffnung strömt.

23. Ventilanordnung (1400; 1600) nach Anspruch 22, wobei die Steuerplatte (1300; 1500) eine Vielzahl von Fluiddurchgängen aufweist, die um einen radial äußeren Abschnitt des Steuerplattenkörpers (1340; 1540) herum angeordnet sind und sich im Wesentlichen gerade durch den Steuerplattenkörper (1340; 1540) erstrecken.

24. Ventilanordnung (1400; 1600) nach Anspruch 23, wobei der erste kontinuierliche ununterbrochene flache Abschnitt des Flächenbereichs der ersten Seite des Steuerplattenkörpers (1340; 1540) zwischen dem Steuerplatten-Durchgangsloch (1342; 1542) und der Vielzahl von Fluiddurchgängen angeordnet ist und der zweite kontinuierliche ununterbrochene flache Abschnitt des Flächenbereichs radial außerhalb der Vielzahl von Fluiddurchgängen angeordnet ist.

25. Ventilanordnung (1400; 1600) nach Anspruch 24, wobei, wenn sich der Steuerplattenkörper (1340; 1540) in der geschlossenen Position befindet, das mindestens eine Einsatzloch (1354; 1554) und die Steuerplatten-Durchgangsöffnung (1342; 1542) eine Fluidverbindung zwischen dem inneren Ventilkammerabschnitt (1259) und dem äußeren Ventilkammerabschnitt (1258) vorsehen, und das mindestens eine Einsetzloch (1354; 1554), das Steuerplatten-Durchgangsloch (1342; 1542) und die Vielzahl von Fluiddurchgängen eine Fluidverbindung zwischen dem inneren Ventilkammerabschnitt (1259), dem äußeren Ventilkammerabschnitt (1258) und dem zweiten Zwischenventilkammerabschnitt (1254) vorsehen.

26. Ventilanordnung (1400; 1600) nach Anspruch 25, wobei ein Sitzeinsatz (1530) in dem Steuerplattenkörper (1340; 1540) aufgenommen ist und die Vielzahl von Fluiddurchgängen in dem Sitzeinsatz (1530) definiert ist.

27. Ventilanordnung (1400; 1600) nach Anspruch 26, wobei der Sitzeinsatz (1530) eine Scheibe aufweist, die eine in dem Steuerplattenkörper (1340; 1540) ausgebildete kreisförmige Nut ausfüllt.

28. Ventilanordnung (1400;1600) nach Anspruch 26, wobei der Sitzeinsatz (1530) eine Vielzahl von Säulen (1531) umfasst, die jeweils in einer von einer Vielzahl von Öffnungen in dem Steuerplattenkörper (1340; 1540) aufgenommen sind, wobei sich jede Säule (1531) von der ersten Seite zu der zweiten Seite erstreckt, wobei jeder der Fluiddurchgänge in einer jeweiligen der Säulen (1531) definiert ist.

29. Ventilanordnung (1400; 1600) nach Anspruch 28, wobei der Sitzeinsatz (1530) eine Scheibe aufweist, die eine in dem Steuerplattenkörper (1340; 1540) ausgebildete kreisförmige Nut ausfüllt.

30. Ventilanordnung (1400; 1600) nach Anspruch 26, wobei der Sitzeinsatz (1530) aus einem Polymermaterial gebildet ist und der Steuerplattenkörper (1340; 1540) aus einem metallischen Material gebildet ist.

31. Ventilanordnung (1400; 1600) nach Anspruch 14, wobei der zentrale Einsatz (1350; 1550) eine konkave Bodenaussparung (1353; 1553) für ein Leiten von Fluid von jedem Einsatzloch (1354; 1554) zu dem Steuerplatten-Durchgangsloch (1342; 1542) aufweist.

32. Ventilanordnung (1400; 1600) nach Anspruch 14, wobei der zentrale Einsatz (1350; 1550) achssymmetrisch ist.

33. Ventilanordnung (1400; 1600) nach Anspruch 14, wobei der zentrale Einsatz (1350; 1550) in dem Befestigungsloch (1348; 1548) durch eines von Presssitz, Schweißen und Löten befestigt ist.

## Revendications

1. Plaque de régulation (1300 ; 1500) pour une soupape à conductance élevée comprenant :
un corps de plaque de régulation (1340 ; 1540) présentant la forme d'un disque essentiellement circulaire doté d'un côté plat et d'un côté opposé au côté plat, la plaque de régulation (1300 ; 1500) étant configurée pour être déplacée au sein d'une soupape par un actionneur, le côté plat ayant une portion plate ininterrompue continue pour arrêter l'écoulement de fluide dans la soupape ; et
un trou de montage centré (1348 ; 1548) défini comme un lamage (1344 ; 1544) dans le corps de plaque de régulation (1340 ; 1540), le trou de montage centré (1348 ; 1548) se terminant par un trou traversant de plaque de régulation (1342 ; 1542) défini dans le corps de plaque de régulation (1340 ; 1540), le trou traversant de plaque de régulation (1342 ; 1542) ayant un diamètre inférieur à un diamètre du trou de montage centré (1348 ; 1548),
**caractérisée en ce que** la plaque de régulation (1300 ; 1500) comprend en outre un insert central (1350 ; 1550) reçu dans le trou de montage (1348 ; 1548), et au moins un trou d'insert (1354 ; 1554) défini dans l'insert central (1340 ; 1550), chaque trou d'insert (1354 ; 1554) formant, conjointement avec le trou traversant de plaque de régulation (1342 ; 1542), un trajet de fluide permettant au fluide de passer du côté plat vers le côté opposé.

2. Plaque de régulation (1300 ; 1500) selon la revendication 1, dans laquelle l'au moins un trou d'insert (1354 ; 1554) comporte une pluralité de trous d'insert (1354 ; 1554) définis dans l'insert central (1350 ; 1550).

3. Plaque de régulation (1300 ; 1500) selon la revendication 2, dans laquelle la pluralité de trous d'insert (1354 ; 1554) sont disposés autour d'un centre de l'insert central (1350 ; 1550) de façon qu'une bande de matériau (1355 ; 1555) de l'insert central (1350 ; 1550) entoure chacun de la pluralité de trous d'insert (1354 ; 1554).

4. Plaque de régulation (1300 ; 1500) selon la revendication 3, comprenant en outre un trou traversant central (1352 ; 1552) s'étendant à travers le centre de l'insert central (1350 ; 1550), le trou traversant central (1352 ; 1552) étant construit pour le montage de l'insert central (1350 ; 1550) et du corps de plaque de régulation (1340 ; 1540) sur un arbre de régulation.

5. Plaque de régulation (1300 ; 1500) selon la revendication 2, dans laquelle la plaque de régulation (1300 ; 1500) comporte une pluralité de passages de fluide disposés autour d'une portion radialement extérieure du corps de plaque de régulation (1340 ; 1540) et s'étendant de manière sensiblement rectiligne à travers le corps de plaque de régulation (1340 ; 1540).

6. Plaque de régulation (1300 ; 1500) selon la revendication 5, dans laquelle le côté plat comporte une première portion plate ininterrompue continue disposée entre le trou traversant de plaque de régulation (1342 ; 1542) et la pluralité de passages de fluide, et une deuxième portion plate ininterrompue continue disposée radialement vers l'extérieur de la pluralité de passages de fluide.

7. Plaque de régulation (1300 ; 1500) selon la revendication 5, dans laquelle un insert de siège (1530) est reçu dans le corps de plaque de régulation (1340 ; 1540) ; la pluralité de passages de fluide étant définis dans l'insert de siège (1530).

8. Plaque de régulation (1300 ; 1500) selon la revendication 7, dans laquelle l'insert de siège (1530) comporte un disque qui remplit une rainure circulaire formée dans le corps de plaque de régulation (1340 ; 1540), l'insert de siège comportant une première portion plate ininterrompue continue disposée radialement vers l'intérieur de la pluralité de passages de fluide et une deuxième portion plate ininterrompue continue disposée radialement vers l'extérieur de la pluralité de passages de fluide.

9. Plaque de régulation (1300 ; 1500) selon la revendication 8, dans laquelle l'insert de siège (1530) comporte en outre une pluralité de piliers (1531) qui sont chacun reçus dans l'une parmi une pluralité d'ouvertures dans le corps de plaque de régulation (1340 ; 1540), chaque pilier (1531) s'étendant à partir du disque, chacun des passages de fluide s'étendant à travers les piliers (1531) et le disque.

10. Plaque de régulation (1300 ; 1500) selon la revendication 7, dans laquelle l'insert de siège (1530) est formé à partir d'un matériau polymère, et le corps de plaque de régulation (1340 ; 1540) est formé à partir d'un matériau métallique.

11. Plaque de régulation (1300 ; 1500) selon la revendication 1, dans laquelle l'insert central (1350 ; 1550) comporte un relief inférieur concave (1353 ; 1553) destiné à guider le fluide issu de chaque trou d'insert (1354 ; 1554) vers le trou traversant de plaque de régulation (1342 ; 1542).

12. Plaque de régulation (1300 ; 1500) selon la revendication 1, dans laquelle l'insert central (1350 ; 1550) est axisymétrique.

13. Plaque de régulation (1300 ; 1500) selon la revendication 1, dans laquelle l'insert central (1350 ; 1550) est fixé dans le trou de montage (1348 ; 1548) par ajustement serré, soudage ou brasage.

14. Ensemble formant soupape (1400 ; 1600) comprenant :
un corps de soupape (1290) ayant une chambre de soupape, au moins une première ouverture de conduit de fluide (1212) en communication fluidique avec la chambre de soupape, au moins une deuxième ouverture de conduit de fluide (1216) en communication fluidique avec la chambre de soupape, et au moins une paire de segments d'arête d'orifice adjacents, l'au moins une paire de segments d'arête d'orifice adjacents s'étendant à partir du corps de soupape (1290) jusque dans la chambre de soupape et définissant une région de chambre de soupape intermédiaire (1254) entre l'au moins une paire de segments d'arête d'orifice adjacents ; et la plaque de régulation (1300 ; 1500) selon l'une quelconque des revendications précédentes.

15. Ensemble formant soupape (1400 ; 1600) selon la revendication 14, dans lequel l'au moins une paire de segments d'arête d'orifice adjacents comporte deux segments d'arête d'orifice adjacents de forme sensiblement circulaire et définissant en outre une portion de chambre de soupape extérieure (1258) disposée à l'extérieur des deux segments d'arête d'orifice adjacents et une portion de chambre de soupape intérieure (1259) disposée à l'intérieur des deux segments d'arête d'orifice adjacents.

16. Ensemble formant soupape (1400 ; 1600) selon la revendication 15, comprenant en outre un premier conduit de fluide (1210) en communication fluidique avec l'au moins une première ouverture de conduit de fluide (1212) et un deuxième conduit de fluide (1214) en communication fluidique avec l'au moins une deuxième ouverture de conduit de fluide (1216), et dans lequel, lorsque le corps de plaque de régulation (1340 ; 1540) est en position fermée, l'au moins une première ouverture de conduit de fluide (1212) est en communication fluidique avec la portion de chambre de soupape intérieure (1259), l'au moins une deuxième ouverture de conduit de fluide (1216) est en communication fluidique avec la portion de chambre de soupape intermédiaire (1254), et la région de surface du premier côté du corps de plaque de régulation (1340 ; 1540) vient en contact étanche avec les deux segments d'arête d'orifice adjacents pour empêcher l'écoulement de fluide entre l'au moins une première ouverture de conduit de fluide (1212) et l'au moins une deuxième ouverture de conduit de fluide (1216).

17. Ensemble formant soupape (1400 ; 1600) selon la revendication 16, dans lequel, lorsque le corps de plaque de régulation (1340 ; 1540) est en position fermée, l'au moins un trou d'insert (1354 ; 1554) et le trou traversant de plaque de régulation (1342 ; 1542) assurent une communication fluidique entre la portion de chambre de soupape intérieure (1259) et la portion de chambre de soupape extérieure (1258).

18. Ensemble formant soupape (1400 ; 1600) selon la revendication 15, comprenant en outre un premier conduit de fluide (1210) en communication fluidique avec l'au moins une première ouverture de conduit de fluide (1212) et un deuxième conduit de fluide (1214) en communication fluidique avec l'au moins une deuxième ouverture de conduit de fluide (1216), et dans lequel, lorsque le corps de plaque de régulation (1340 ; 1540) est en position fermée, l'au moins une première ouverture de conduit de fluide (1212) est en communication fluidique avec la portion de chambre de soupape extérieure (1258), l'au moins une deuxième ouverture de conduit de fluide (1216) est en communication fluidique avec la portion de chambre de soupape intermédiaire (1254), et la région de surface du premier côté du corps de plaque de régulation (1340 ; 1540) vient en contact étanche avec les deux segments d'arête d'orifice adjacents pour empêcher le fluide de s'écouler entre l'au moins une première ouverture de conduit de fluide (1212) et l'au moins une deuxième ouverture de conduit de fluide (1216).

19. Ensemble formant soupape (1400 ; 1600) selon la revendication 18, dans lequel, lorsque le corps de plaque de régulation (1340 ; 1540) est en position fermée, l'au moins un trou d'insert (1354 ; 1554) et le trou traversant de plaque de régulation (1342 ; 1542) assurent une communication fluidique entre la portion de chambre de soupape extérieure (1258) et la portion de chambre de soupape intérieure (1259).

20. Ensemble formant soupape (1400 ; 1600) selon la revendication 14, dans lequel l'au moins une paire de segments d'arête d'orifice adjacents comporte quatre segments d'arête d'orifice adjacents de forme sensiblement circulaire, les quatre segments d'arête d'orifice adjacents comportant un segment d'arête d'orifice le plus grand (1220), un premier segment d'arête d'orifice plus petit (1221) entouré par le segment d'arête d'orifice le plus grand (1220), un deuxième segment d'arête d'orifice plus petit (1222) entouré par le premier segment d'arête d'orifice plus petit (1221), et un segment d'arête d'orifice le plus petit (1223) entouré par le deuxième segment d'arête d'orifice plus petit (1222), les quatre segments d'arête d'orifice adjacents définissant une portion de chambre de soupape extérieure (1258) disposée à l'extérieur des quatre segments d'arête d'orifice adjacents, une portion de chambre de soupape intérieure (1259) disposée à l'intérieur des quatre segments d'arête d'orifice adjacents, une première portion de chambre de soupape intermédiaire (1256) disposée entre le segment d'arête d'orifice le plus grand (1220) et le premier segment d'arête d'orifice plus petit (1221), une deuxième portion de chambre de soupape intermédiaire (1254) disposée entre le premier segment d'arête d'orifice plus petit (1221) et le deuxième segment d'arête d'orifice plus petit (1222), et une troisième portion de chambre de soupape intermédiaire (1252) disposée entre le deuxième segment d'arête d'orifice plus petit (1222) et le segment d'arête d'orifice le plus petit (1223).

21. Ensemble formant soupape (1400 ; 1600) selon la revendication 20, comprenant en outre un premier conduit de fluide (1210) en communication fluidique avec l'au moins une première ouverture de conduit de fluide (1212) et un deuxième conduit de fluide (1214) en communication fluidique avec l'au moins une deuxième ouverture de conduit de fluide (1216), et dans lequel, lorsque le corps de plaque de régulation (1340 ; 1540) est en position fermée, l'au moins une première ouverture de conduit de fluide (1212) est en communication fluidique avec la portion de chambre de soupape intérieure (1259), l'au moins une deuxième ouverture de conduit de fluide (1216) est en communication fluidique avec la première portion de chambre de soupape intermédiaire (1256), et une première portion plate ininterrompue continue de la région de surface du premier côté du corps de plaque de régulation (1340 ; 1540) vient en contact étanche avec le segment d'arête d'orifice le plus grand (1220) et le premier segment d'arête d'orifice plus petit (1221) pour empêcher le fluide de s'écouler entre l'au moins une première ouverture de conduit de fluide (1212) et l'au moins une deuxième ouverture de conduit de fluide (1216).

22. Ensemble formant soupape (1400 ; 1600) selon la revendication 21, dans lequel le corps de soupape (1290) comporte en outre au moins une troisième ouverture de conduit de fluide en communication fluidique avec le deuxième conduit de fluide (1214), et dans lequel, lorsque le corps de plaque de régulation (1340 ; 1540) est en position fermée, l'au moins une troisième ouverture de conduit de fluide est en communication fluidique avec la troisième portion de chambre de soupape intermédiaire (1522), et une deuxième portion plate ininterrompue continue de la région de surface du premier côté du corps de plaque de régulation (1340 ; 1540) vient en contact étanche avec le deuxième segment d'arête d'orifice plus petit (1222) et le segment d'arête d'orifice le plus petit (1223) pour empêcher le fluide de s'écouler entre l'au moins une première ouverture de conduit de fluide (1212) et l'au moins une troisième ouverture de conduit de fluide.

23. Ensemble formant soupape (1400 ; 1600) selon la revendication 22, dans lequel la plaque de régulation (1300 ; 1500) comporte une pluralité de passages de fluide disposés autour d'une portion radialement extérieure du corps de plaque de régulation (1340 ; 1540) et s'étendant de manière sensiblement rectiligne à travers le corps de plaque de régulation (1340 ; 1540).

24. Ensemble formant soupape (1400 ; 1600) selon la revendication 23, dans lequel la première portion plate ininterrompue continue de la région de surface du premier côté du corps de plaque de régulation (1340 ; 1540) est disposée entre le trou traversant de plaque de régulation (1342 ; 1542) et la pluralité de passages de fluide, et la deuxième portion plate ininterrompue continue de la région de surface est disposée radialement vers l'extérieur de la pluralité de passages de fluide.

25. Ensemble formant soupape (1400 ; 1600) selon la revendication 24, dans lequel, lorsque le corps de plaque de régulation (1340 ; 1540) est en position fermée, l'au moins un trou d'insert (1354 ; 1554) et le trou traversant de plaque de régulation (1342 ; 1542) assurent une communication fluidique entre la portion de chambre de soupape intérieure (1259) et la portion de chambre de soupape extérieure (1258), et l'au moins un trou d'insert (1354 ; 1554), le trou traversant de plaque de régulation (1342 ; 1542) et la pluralité de passages de fluide assurent une communication fluidique entre la portion de chambre de soupape intérieure (1259), la portion de chambre de soupape extérieure (1258) et la deuxième portion de chambre de soupape intermédiaire (1254).

26. Ensemble formant soupape (1400 ; 1600) selon la revendication 25, dans lequel un insert de siège (1530) est reçu dans le corps de plaque de régulation (1340 ; 1540) ; la pluralité de passages de fluide étant définis dans l'insert de siège (1530).

27. Ensemble formant soupape (1400 ; 1600) selon la revendication 26, dans lequel l'insert de siège (1530) comporte un disque qui remplit une rainure circulaire formée dans le corps de plaque de régulation (1340 ; 1540).

28. Ensemble formant soupape (1400 ; 1600) selon la revendication 26, l'insert de siège (1530) comportant une pluralité de piliers (1531) qui sont chacun reçus dans l'une parmi une pluralité d'ouvertures dans le corps de plaque de régulation (1340 ; 1540), chaque pilier (1531) s'étendant à partir du premier côté jusqu'au deuxième côté, chacun des passages de fluide étant défini dans l'un respectif parmi les piliers (1531).

29. Ensemble formant soupape (1400 ; 1600) selon la revendication 28, dans lequel l'insert de siège (1530) comporte un disque qui remplit une rainure circulaire formée dans le corps de plaque de régulation (1340 ; 1540).

30. Ensemble formant soupape (1400 ; 1600) selon la revendication 26, dans lequel l'insert de siège (1530) est formé à partir d'un matériau polymère, et le corps de plaque de régulation (1340 ; 1540) est formé à partir d'un matériau métallique.

31. Ensemble formant soupape (1400 ; 1600) selon la revendication 14, dans lequel l'insert central (1350 ; 1550) comporte un relief inférieur concave (1353 ; 1553) destiné à guider le fluide issu de chaque trou d'insert (1354 ; 1554) vers le trou traversant de plaque de régulation (1342 ; 1542).

32. Ensemble formant soupape (1400 ; 1600) selon la revendication 14, dans lequel l'insert central (1350 ; 1550) est axisymétrique.

33. Ensemble formant soupape (1400 ; 1600) selon la revendication 14, dans lequel l'insert central (1350 ; 1550) est fixé dans le trou de montage (1348 ; 1548) par ajustement serré, soudage ou brasage.
